# NEW EUROPEAN PATENT SPECIFICATION

(11) **EP 2 502 967 B2**
(45) Date of publication and mention of the opposition decision: **12.10.2022**
(45) Mention of the grant of the patent: 21.08.2019
(21) Application number: 12159029.3
(22) Date of filing: 12.03.2012
(51) Int. Cl.: C09D 11/00

(54) **Ink composition**
Tintenzusammensetzung
Composition d'encre

(30) Priority: 25.03.2011 JP 2011068249
(43) Date of publication of application: 26.09.2012
(73) Proprietor: Fujifilm Speciality Ink Systems Limited, Broadstairs, Kent CT10 2LE (GB); FUJIFILM Corporation, Tokyo 106-8620 (JP)
(72) Inventor: Oshima, Yasuhito, Ashigarakami-gun, Kanagawa 258-8577 (JP)
(74) Representative: Klunker IP Patentanwälte PartG mbB

(56) References cited:
- WO-A1-2009/045703
- WO-A2-2008/045517
- US-A- 6 103 453
- US-A1- 2008 090 929
- US-A1- 2009 053 484
- US-A1- 2010 129 565
- US-A1- 2011 071 239
- W.A. Green: "Industrial Photoinitiators - A Technical Guide", , 1 January 2010 (2010-01-01), pages 80-81,

## Description

### BACKGROUND OF THE INVENTION

### 1. Field of the Invention

The present invention relates to an ink composition.

### 2. Description of the Related Art

As a system employing an image recording method of forming an image on a recording medium such as paper based on image data signals, an electrophotographic system, sublimation type and melt type heat transfer systems, an inkjet recording system, and the like are available. An electrophotographic system requires a process of forming an electrostatic latent image on a photoreceptor drum through charging and exposure. Therefore, the system becomes complicated, and as a result, there is a problem that high production cost is required. Furthermore, a heat transfer system is such that the apparatuses are inexpensive, but since an ink ribbon is used, the running costs are high, and there is a problem that waste materials are generated.

On the other hand, an inkjet recording system can make use of inexpensive apparatuses, and since images are directly formed on a recording medium by discharging an ink composition only on image areas where needed, an ink composition can be efficiently used, which leads to lower running costs. Furthermore, the inkjet recording system produces less noise, and is excellent as an image recording method.

In recent years, more attention has been paid to a solvent-free type inkjet recording system by which an image is drawn with an ink composition that can be cured by irradiation with a radiation such as ultraviolet radiation (radiation-curable ink composition) by an inkjet recording system, subsequently the image is irradiated with a radiation such as ultraviolet radiation, and the ink composition is cured.

In general, when compared with aqueous ink compositions containing water as a diluent or solvent type ink compositions containing an organic solvent as a diluent, inkjet recording systems using a radiation-curable ink composition are capable of drawing images on non-absorptive recording media such as glass, metal and plastic recording media, and the range of application of recording media is broad. Furthermore, inkjet recording systems are excellent in the scratch resistance or solvent resistance of the drawn images, have high sensitivity, and have excellent productivity. In addition, since inkjet recording systems do not employ volatile solvents, less environmental burden is posed.

The curing mechanism for radiation-curable ink compositions is roughly classified into a radical polymerization type and a cation polymerization type. Radical polymerization type ink compositions have advantages such as excellent storage stability and low price as compared with the cation polymerization type, and therefore, the radical polymerization type ink compositions are widely used in the market.

JP2006-206875A discloses an ink composition including a polymerizable compound containing at least an N-vinyl compound, photopolymerization initiators including two or more kinds selected from bisacylphosphine oxide, monoacylphosphine oxide and an α-aminoketone, and fine particles having a polymerizable functional group as a polymerization accelerator.

US 2008/090929 A1 discloses rapid radiation curable ink compositions that can cure at speeds that are greater than the speeds at which other commercially available ink compositions cure. The rapidly curing ink compositions advantageously display an increased cure speed, improved adhesion and solvent resistance when compared with other commercially available compositions. The ink compositions are substantially free of solvent, and include an ethylenically unsaturated hyperbranched oligomer having an average functionality of at least 6 per oligomer, a difunctional ethylenically unsaturated compound, and a photoinitiator. The ink compositions optionally include a surfactant and/or a vinyl amide monomer.

US 2011/071239 A1 teaches an ink composition comprising: (A) an isoindoline-based pigment; (B) a pigment dispersing agent; (C) a radically polymerizable compound; and (D) a polymerization initiator; the radically polymerizable compound (C) comprising at least one compound selected from the group consisting of compounds represented by Formula (I) to Formula (III), wherein R1 denotes a hydrogen atom or a methyl group, A1 denotes a single bond or a divalent linking group, R2 denotes a monovalent substituent, m denotes an integer of 0 to 13, and when m is an integer of 2 to 13, the R2s may be identical to or different from each other, R3 denotes a hydrogen atom or a methyl group, A2 denotes a single bond or a divalent linking group, and n denotes an integer of 1 to 5.

US 2009/053484 A1 discloses an active energy ray-curable inkjet ink comprising a pigment and polymerizable monomers that is superior in nozzle ejection stability, adhesiveness to recording medium and storage stability, wherein the polymerizable monomers comprise N-acryloyloxyethyl hexahydrophthalimide.

US 2010/129565 A1 discloses an ink composition including a sensitizer represented by Formula (I), a photopolymerization initiator, and a polymerizable compound having an ethylenic unsaturated bond. In the Formula (I), R1, R6 and R8 each independently represent a hydrogen atom, a hydroxyl group, a halogen atom, a linear or branched alkyl group which may be substituted, or an alkoxy group which may be substituted. R2, R4, R5 and R7 each independently represent a hydrogen atom, a halogen atom, or a cyano group. R3 represents a hydrogen atom, a linear or branched alkyl group which may be substituted, or a cycloalkyl group which may be substituted.

### SUMMARY OF THE INVENTION

The radical polymerization type ink compositions also have a disadvantage that polymerization is inhibited by oxygen in the atmosphere, and the ink compositions are likely to be insufficiently cured. If curing occurs insufficiently, insufficient curing may cause deterioration in the quality of print materials, such as that the surface of print materials may become sticky, banding may occur, or dull images without any glossiness are likely to be formed. Therefore, attempts have been made to improve the print quality. In the ink composition described in JP2006-206875A, curability has been improved, but a failure in the inkjet discharge stability occurs, which is speculated to be caused by fine particles. Furthermore, the image quality is not satisfactory, either.

An object of the invention is to provide an ink composition which has stabilized inkjet dischargeability and satisfactory curability, and suppresses the occurrence of banding, thereby producing high quality print materials with high glossiness.

Here, the term banding means band-shaped density unevenness appearing on images, and particularly, banding occurs conspicuously in half-tone images.

The ink composition of the invention is defined in the appended claims and consists of:
(Component A) a colorant:
(Component B) a radical polymerization initiator;
(Component C) a radical polymerizable compound,
   a radical polyfunctional polymerizable compound, and optionally
   a surfactant
   a dispersant, and
   other components selected from a co-sensitizer, an ultraviolet absorbent, an antioxidant, a discoloration preventing agent, a conductive salt, a solvent, a polymer compound, a basic compound, a leveling additive, a mattifying agent, and a polyester resin, a polyurethane resin, a vinyl resin, an acrylic resin, a rubber resin and a wax for adjusting the film properties,
wherein the (Component B) radical polymerization initiator includes a compound represented by formula (B-I) and a compound represented by formula (B-II),
the ink composition comprises the compound represented by formula (B-I) in an amount of from 1 % by mass to 7 % by mass based on the total mass of the ink composition, and
the ink composition comprises the compound represented by formula (B-II) in an amount of from 1 % by mass to 14 % by mass based on the total mass of the ink composition: 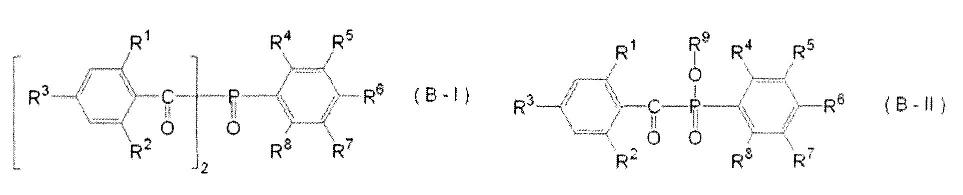
   wherein in the formula (B-I) and formula (B-II), R₁ and R₂ each independently represent an alkyl group having 1 to 4 carbon atoms; R₃ represents a hydrogen atom, a hydrocarbon group having 1 to 20 carbon atoms, or an alkoxy group having 1 to 20 carbon atoms: R₄, R₅, R₆, R₇ and R₈ each independently represent a hydrogen atom, a halogen atom, a hydrocarbon group having 1 to 20 carbon atoms, or an alkoxy group having 1 to 20 carbon atoms; R₉ represents a hydrocarbon group having 1 to 20 carbon atoms; and R₁, R₂ and R₃ that are present twice in the formula (B-I) may be respectively identical with or different from each other,
   wherein the (Component C) radical polymerizable compound includes a compound represented by the formula (C-2) or a compound represented by the formula (C-4), and optionally a compound represented by the formula (C-1) and/or a compound represented by the formula (C-3): 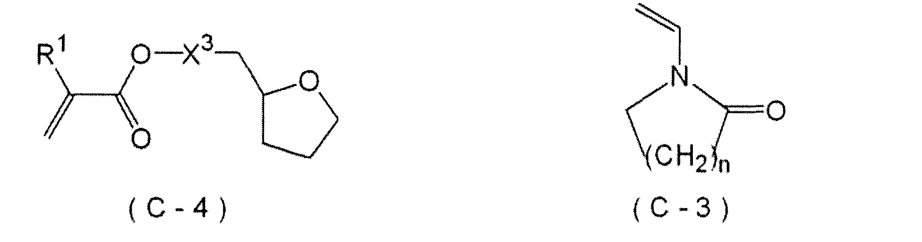
      wherein in the formula (C-2) and formula (C-4), R¹ represents a hydrogen atom or a methyl group; X², and X³ each represent a single bond or a divalent linking group,
      wherein in the formula (C-1) and formula (C-3), R¹ represents a hydrogen atom or a methyl group; X¹ represents a single bond or a divalent linking group; R² to R¹² each independently represent a hydrogen atom or an alkyl group; and n represents an integer from 1 to 5,
      wherein the ink composition includes, the compound represented by the formula (C-1), the compound represented by the formula (C-2), the compound represented by the formula (C-3) and the compound represented by the formula (C-4), in an amount in total of 20 % by mass or greater based on the total amount of the (Component C) radical polymerizable compound, and
      wherein a content of the polyfunctional polymerizable compound is 1 % by mass to 20 % by mass based on the total mass of the ink composition.

In the ink composition according to a preferred embodiment, the (Component C) radical polymerizable compound includes at least two compounds selected from the group consisting of compounds represented by the formula (C-1) to formula (C-4).

In the ink composition according to a still more preferred embodiment, the (Component C) radical polymerizable compound includes compounds represented by the formula (C-1) to formula (C-4) in an amount of 80 % by mass or greater based on the total amount of the radical polymerizable compounds.

The present invention also includes the ink composition described above, which is used for inkjet recording applications.

In the ink composition according to a still more preferred embodiment, X¹ in the formula (C-1) is a single bond, a divalent hydrocarbon group, a poly(alkyleneoxy) group, or a poly(alkyleneoxy)alkyl group, having a number of carbon atoms of 1 to 60, X² in the formula (C-2) is a single bond, a divalent hydrocarbon group, a poly(alkyleneoxy) group, or a poly(alkyleneoxy)alkyl group, having a number of carbon atoms of 1 to 60, and X³ in the formula (C-4) is a single bond, -R⁶-O- or -R⁶-COO-, wherein R⁶ represents an alkyl group having 1 to 5 carbon atoms, or a group obtained by combining two or more of these.

In the ink composition according to a still more preferred embodiment, the compound represented by the formula (C-1) is selected from the group consisting of compounds (C-1-1) to (C-1-6): 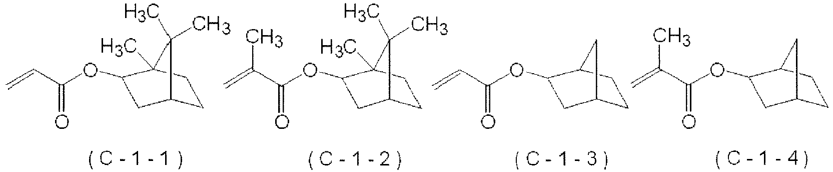 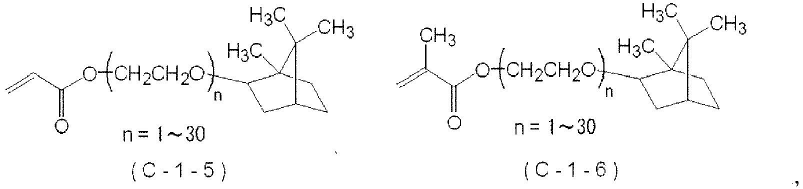 the compound represented by the formula (C-2) is selected from the group consisting of compounds (C-2-1) to (C-2-4): 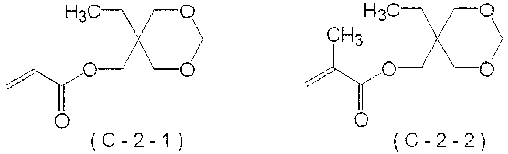 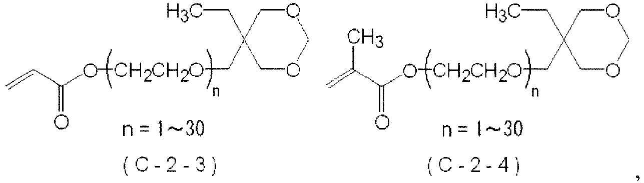 the compound represented by the formula (C-4) is selected from the group consisting of compounds (C-4-1) to (C-4-22):

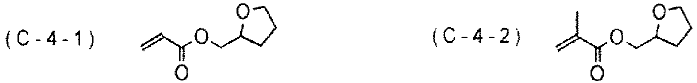

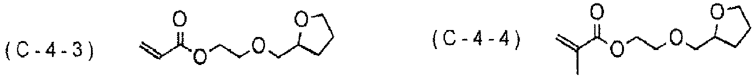

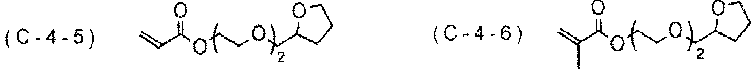

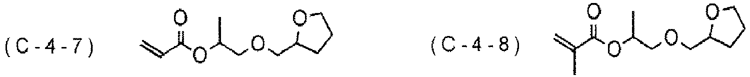

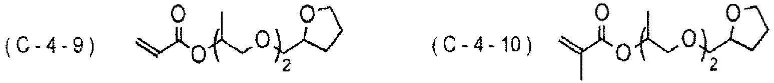

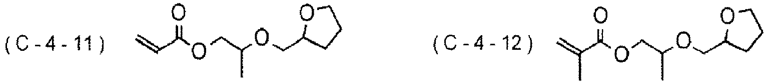

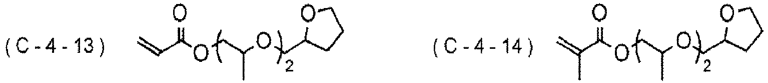

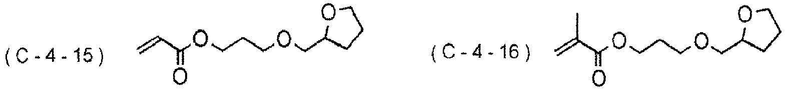

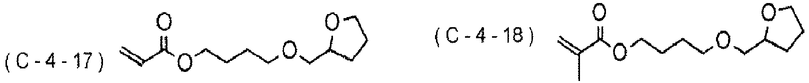

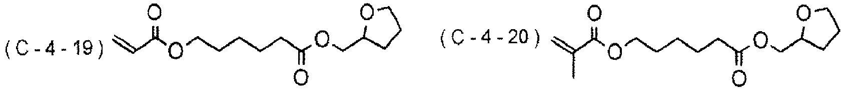

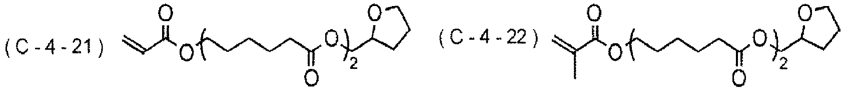

In the ink composition according to a still more preferred embodiment, X¹ in the formula (C-1) is a single bond, X² in the formula (C-2) is a divalent hydrocarbon group having a number of carbon atoms of 1 to 8, and X³ in the formula (C-4) is a single bond.

In the ink composition according to a still more preferred embodiment, the ink composition includes the compounds represented by the above formula (C-1) to formula (C-4) in an amount of 50 % by mass or greater based on the total amount of the radical polymerizable compounds.

According to the present invention, there is provided the ink composition which has stabilized inkjet dischargeability and satisfactory curability, and suppresses the occurrence of banding, thereby producing high quality print materials with high glossiness.

The ink composition of the present invention consists of:
(Component A) a colorant;
(Component B) a radical polymerization initiator;
(Component C) a radical polymerizable compound,
a radical polyfunctional polymerizable compound, and optionally
a surfactant
a dispersant, and
other components selected from a co-sensitizer, an ultraviolet absorbent, an antioxidant, a discoloration preventing agent, a conductive salt, a solvent, a polymer compound, a basic compound, a leveling additive, a mattifying agent, and a polyester resin, a polyurethane resin, a vinyl resin, an acrylic resin, a rubber resin and a wax for adjusting the film properties,
wherein the (Component B) radical polymerization initiator includes a compound represented by formula (B-I) and a compound represented by formula (B-II),
the ink composition comprises the compound represented by formula (B-I) in an amount of from 1 % by mass to 7 % by mass based on the total mass of the ink composition, and
the ink composition comprises the compound represented by formula (B-II) in an amount of from 1 % by mass to 14 % by mass based on the total mass of the ink composition:
   wherein in the formula (B-I) and formula (B-II), R₁ and R₂ each independently represent an alkyl group having 1 to 4 carbon atoms; R₃ represents a hydrogen atom, a hydrocarbon group having 1 to 20 carbon atoms, or an alkoxy group having 1 to 20 carbon atoms; R₄, R₅, R₆, R₇, and R₈ each independently represent a hydrogen atom, a halogen atom, a hydrocarbon group having 1 to 20 carbon atoms, or an alkoxy group having 1 to 20 carbon atoms; R₉ represents a hydrocarbon group having 1 to 20 carbon atoms; and R₁, R₂ and R₃ that are present twice in the formula (B-I) may be respectively identical with or different from each other,
   wherein the (Component C) radical polymerizable compound includes a compound represented by the formula (C-2) or a compound represented by the formula (C-4), and optionally a compound represented by the formula (C-1) and/or a compound represented by the formula (C-3): 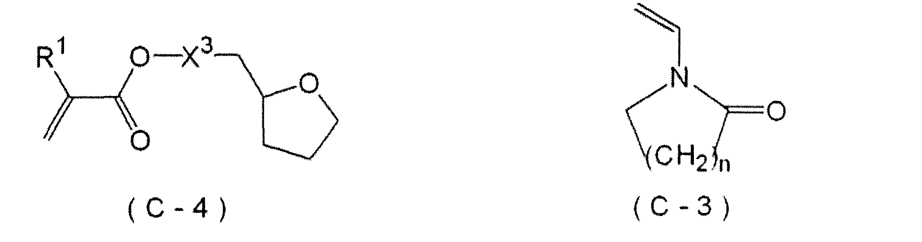
   wherein in the formula (C-2) and formula (C-4), R¹ represents a hydrogen atom or a methyl group; X², and X³ each represent a single bond or a divalent linking group,
   wherein in the formula (C-1) and formula (C-3), R¹ represents a hydrogen atom or a methyl group; X¹ represents a single bond or a divalent linking group; R² to R¹² each independently represent a hydrogen atom or an alkyl group; and n represents an integer from 1 to 5,
   wherein the ink composition includes, the compound represented by the formula (C-1), the compound represented by the formula (C-2), the compound represented by the formula (C-3) and the compound represented by the formula (C-4), in an amount in total of 20 % by mass or greater based on the total amount of the (Component C) radical polymerizable compound, and wherein a content of the polyfunctional polymerizable compound is 1 % by mass to 20 % by mass based on the total mass of the ink composition.

### DESCRIPTION OF THE PREFERRED EMBODIMENTS

Hereinafter, the "(Component A) colorant" and the like will be simply referred to as "Component A" and the like.

Furthermore, according to the present invention, the expression "A to B" (provided that A < B) representing a numerical value range means a range equal to or greater than A and equal to or less than B, and the expression "X to Y" (provided that X > Y) means a range equal to or less than X and equal to or greater than Y. That is, the range means a numerical value range including the end points.

The ink composition of the present invention is an oily ink composition that can be cured by an active radiation. The term "active radiation" is a radiation which can apply energy that generates a polymerization initiator species in the ink composition as a result of irradiation of the radiation. Examples of the "active radiation" include α-radiation, γ-radiation, X-rays, ultraviolet radiation, visible radiation, and an electron beam. The "active radiation" used in the present invention is, among others, preferably ultraviolet radiation or an electron beam, and more preferably ultraviolet radiation, from the viewpoints that the curing sensitivity of the ink composition can be improved, and the irradiation apparatuses for the "active radiation" are easily available.

Print materials obtained by inkjet printing using an active radiation-curable ink composition have less glossy cured films and conspicuous streak unevenness, as compared with those print materials obtained by inkjet printing using an aqueous ink composition or a solvent type ink composition. As one of the factors of having less glossiness, it can be speculated that when an ink composition that has been ejected dropwise is cured by an active radiation immediately after impact, the shape at the time of impact is preserved, and the shape of the surface of the print material turns into the shape of surface unevenness. Furthermore, it can also be speculated to be because, after the impact of the ink composition, adjacent ink compositions non-uniformly fuse (droplet ejection interference), causing density unevenness. Streak unevenness is likely to occur when curing by an active radiation occurs insufficiently.

On the other hand, the ink composition of the present invention provides inkjet images that have excellent glossiness of print materials and less streak unevenness. The discharged ink composition including the Component A, Component B and Component C acquires high curability particularly in the inside the ink composition as a result of the irradiation of an active radiation immediately after impact. Therefore, it is speculated that relatively smooth print surfaces are provided when the unnecessary fusion between portions of the ink composition after impact is suppressed, and appropriate spread of the ink composition after impact is accompanied.

Particularly, when polymerizable compounds represented by the formula (C-1), formula (C-2), and formula (C-4) which are assumed to have large amounts of dissolved oxygen are present in the ink composition, the outermost surface of the cured film is subjected to oxygen polymerization inhibition, and the initial reaction rate is decreased. It is speculated that thereby, the outermost surface of the ink composition after impact is maintained in the liquid state for a long time, the outermost surface of the ink composition after impact is spread wet, and coalescence of portions of the ink composition is accelerated. Furthermore, when a compound represented by the formula (C-3), which is a component that softens a cured film, is added, leveling of the film during the curing process is further accelerated, and the smoothness of the ink composition after impact is further promoted. It is speculated that as a result, a smoother flat surface of the ink composition is formed, and glossy images are obtained.

In printing in a multipass mode by which printing is carried out by overstriking the same parts, there occur instances in which, at the time of overstriking, an ink composition that is ejected dropwise later is stacked on an ink composition that has been previously ejected dropwise. At this time, if the outermost surface of the film of the ink composition that has been previously ejected dropwise is in the liquid state, the wet spreading of the ink composition that is ejected dropwise later is increased, and thereby higher gloss may be obtained.

In regard to the control of the cured state of the ink composition that has been ejected dropwise, it is important that only the extreme outermost surface of the ink composition retains the liquid state. If the liquid state is retained for a long time also in the inside of the ink composition that has been ejected dropwise, the surface of the print material may become sticky at the end, or at the time of overstriking, the ink composition that is ejected dropwise later may infiltrate into the inside of the film and form crater-shaped depressions on the print materials. As a result, smoothness at the surface of the print materials may be lost, in contrast. Furthermore, if the curability of the inside is low, droplet ejection interference after impact (the impact positions are out of alignment because of non-uniform coalescence of the ink composition that has been ejected dropwise) may be caused, and thereby streak unevenness may become conspicuous. In the present invention, it is speculated that when the compound represented by the formula (B-I) and the compound represented by the formula (B-II) are incorporated in specific amounts, a high curability of the inside can be maintained.

In the ink composition of the present invention, when the Components A, B and C are combined, it can be realized that only the outermost surface of the cured film selectively retains the liquid state for a long time, while the curability of the inside of the ink composition that has been ejected dropwise is strongly accelerated. As a result, it is speculated that print materials which have high glossiness but do not have visible streak unevenness may be obtained.

### (Component A) Colorant

The ink composition of the present invention includes a colorant.

It is preferable that the ink composition of the present invention include at least one colorant selected from the group consisting of white, cyan, magenta, yellow and black.

The colorant is not particularly limited, but pigments and oil-soluble dyes having excellent weather resistance and rich color reproducibility are preferred, and the pigments and dyes can be arbitrarily selected from known colorants such as soluble dyes and used. As the colorant, from the viewpoint of not lowering the sensitivity of the curing reaction due to active radiation, it is preferable to select a compound which does not function as a polymerization inhibitor, and particularly a compound which does not inhibit radical polymerization.

The pigment that can be used in the present invention is not particularly limited, and can be appropriately selected according to the purpose. For example, known organic pigments and inorganic pigments may be used, and resin particles dyed with a dye, a commercially available pigment dispersion or a surface-treated pigment (for example, a product obtained by dispersing a pigment with a dispersant such as water, a liquid organic compound or an insoluble resin, and a product obtained by treating the surface of a pigment with a resin or a pigment derivative) may also be used. For example, those products described in Seishirou Ito, ed., "Encyclopedia of Pigments" (2000, published by Asakura Shoten K.K.), Isao Hashimoto, "Handbook of Organic Pigments" (2006, published by Color Office), W. Herbst and K. Hunger, ed., "Industrial Organic Pigments" (1992, published by Wiley-VHC), JP2002-12607A, JP2002-188025A, JP2003-26978A, and JP2003-342503A.

Examples of the organic pigments and inorganic pigments include yellow pigments, red pigments, magenta pigments, blue pigments, cyan pigments, green pigments, orange pigments, brown pigments, violet pigments, black pigments and white pigments.

Preferred examples of yellow pigments include monoazo pigments such as C.I. Pigment Yellow 1, 2, 3, 4, 5, 10, 65, 73, 74, 75, 97, 98, 111, 116, 130, 167, and 205; monoazo lake pigments such as C.I. Pigment Yellow 61, 62, 100, 168, 169, 183, 191, 206, 209, and 212; disazo pigments such as C.I. Pigment Yellow 12, 13, 14, 16, 17, 55, 63, 77, 81, 83, 97, 124, 126, 127, 152, 155, 172, 174, 176, 214, and 219; anthraquinone pigments such as C.I. Pigment Yellow 24, 108, 193, and 199; monoazo pyrazolone pigments such as C.I. Pigment Yellow 60; condensed azo pigments such as C.I. Pigment Yellow 93, 95, 128, and 166; isoindoline pigments such as C.I. Pigment Yellow 109, 110, 139, 173, and 185; benzimidazolone pigments such as C.I. Pigment Yellow 120, 151, 154, 175, 180, 181, and 194; azomethine metal complex pigments such as C.I. Pigment Yellow 117, 150, and 153; quinophthalone pigments such as C.I. Pigment Yellow 138; and quinoxaline pigments such as C.I. Pigment Yellow 213.

Examples of red or magenta pigments include monoazo pigments such as C.I. Pigment Red 3; monoazo lake pigments such as C.I. Pigment Red 193; disazo pigments such as C.I. Pigment Red 38; naphthol AS pigments such as C.I. Pigment Red 2, 5, 8, 9, 10, 11, 12, 14, 15, 16, 17, 18, 22, 23, 31, 32, 112, 114, 146, 147, 150, 170, 187, 188, 210, 213, 238, 245, 253, 256, 258, 266, 268, and 269; β-naphthol pigments such as naphthol AS pigments 3, 4, and 6; β-naphthol lake pigments such as C.I. Pigment Red 49, 53, and 68; naphthol AS lake pigments such as C.I. Pigment Red 237, 239, and 247; pyrazolone pigments such as C.I. Pigment Red 41; BONA lake pigments such as C.I. Pigment Red 48, 52, 57, 58, 63, 64:1, and 200; xanthene lake pigments such as C.I. Pigment Red 81:1, 169, and 172; thioindigo pigments such as C.I. Pigment Red 88, and 181; perylene pigments such as C.I. Pigment Red 122, 202 (including a mixture with C.I. Pigment Violet 19), 123, 149, 178, 179, 190, and 224; condensed azo pigments such as C.I. Pigment Red 144, 166, 214, 220, 221, 242, and 262; anthraquinone pigments such as C.I. Pigment Red 168, 177, and 263; anthraquinone lake pigments such as C.I. Pigment Red 83; benzimidazolone pigments such as C.I. Pigment Red 171, 175, 176, 185, and 208; quinacridone pigments such as C.I. Pigment Red 207, 209, and 262; diketopyrrolopyrrole pigments such as C.I. Pigment Red 254, 255, 264, 270, and 272; and azomethine metal complex pigments such as C.I. Pigment Red 257, and 271.

Preferred examples of blue or cyan pigments include naphthol AS pigments such as C.I. Pigment Blue 25 and 26; phthalocyanine pigments such as C.I. Pigment Blue 15, 15:1, 15:2, 15:3, 15:4, 15:6, 16, and 17:1; dye lake pigments such as C.I. Pigment Blue 1, 24:1, and 56; and anthraquinone pigments such as C.I. Pigment Blue 60.

Preferred examples of green pigments such as dye lake pigments such as C.I. Pigment Green 1 and 4; phthalocyanine pigments such as C.I. Pigment Green 7 and 36; and azomethine metal complex pigments such as C.I. Pigment Green 8.

Preferred examples of orange pigments such as monoazo pigments such as C.I. Pigment Orange 1; β-naphthol pigments such as C.I. Pigment Orange 2, 3, and 5; naphthol AS pigments such as C.I. Pigment Orange 4, 24, 38, and 74; pyrazolone pigments such as C.I. Pigment Orange 13 and 34; benzimidazolone pigments such as C.I. Pigment Orange 36, 60, 62, 64, and 72; disazo pigments such as C.I. Pigment Orange 15 and 16; β-naphthol lake pigments such as C.I. Pigment Orange 17 and 46; naphthalenesulfonic acid lake pigments such as C.I. Pigment Orange 19; perinone pigments such as C.I. Pigment Orange 43; quinacridone pigments such as C.I. Pigment Orange 48 and 49; anthraquinone pigments such as C.I. Pigment Orange 51; isoindolinone pigments such as C.I. Pigment Orange 61; isoindoline pigments such as C.I. Pigment Orange 66; azomethine metal complex pigments such as C.I. Pigment Orange 68; and diketopyrrolopyrrole pigments such as C.I. Pigment Orange 71, 73, and 81.

Preferred examples of brown pigments include BONA lake pigments such as C.I. Pigment Brown 5; condensed azo pigments such as C.I. Pigment Brown 23, 41, and 42; and benzimidazolone pigments such as C.I. Pigment Brown 25 and 32.

Examples of violet pigments include dye lake pigments such as C.I. Pigment Violet 1, 2, 3, and 27; naphthol AS pigments such as C.I. Pigment Violet 13, 17, 25, and 50; anthraquinone lake pigments such as C.I. Pigment Violet 5:1; quinacridone pigments such as C.I. Pigment Violet 19; dioxazine pigments such as C.I. Pigment Violet 23 and 37; perylene pigments such as C.I. Pigment Violet 29; benzimidazolone pigments such as C.I. Pigment Violet 32; and thioindigo pigments such as C.I. Pigment Violet 38.

Preferred examples of black pigments include indazine pigments such as C.I. Pigment Black 1; carbon black which is C.I. Pigment Black 7; graphite which is C.I. Pigment Black 10; magnetite which is C.I. Pigment Black 11; anthraquinone pigments such as C.I. Pigment Black 20; and perylene pigments such as C.I. Pigment Black 31 and 32.

Preferred examples of white pigments include zinc oxide which is C.I. Pigment White 4; titanium oxide which is C.I. Pigment White 6; zinc sulfide which is C.I. Pigment White 7; zirconium oxide (zirconium white) which is C.I. Pigment White 12; calcium carbonate which is C.I. Pigment White 18; aluminum oxide-silicon oxide (kaolin clay) which is C.I. Pigment White 19; barium sulfate which is C.I. Pigment White 21 or 22; aluminum hydroxide (alumina white) which is C.I. Pigment White 23; silicon oxide which is C.I. Pigment White 27; and calcium silicate which is C.I. Pigment White 28. The inorganic particles that are used in white pigments may be particles of a simple substance, or may be composite particles with oxides of silicon, aluminum, zirconium, titanium and the like, organic metal compounds or organic compounds. Among them, titanium oxide has lower specific gravity, a larger refractive index, larger opacifying power or coloring power, and also excellent durability against acids, alkalis and other environments as compared with other white pigments, and therefore, titanium oxide is suitably used. Meanwhile, in addition to titanium oxide, other white pigments (may be pigments other than those white pigments described above) may also be used in combination.

The oil-soluble dye that can be used in the present invention means a dye that is substantially insoluble in water. Specifically, the oil-soluble dye refers to a dye having a solubility in water at 25°C (mass of dye that can be dissolved in 100 g of water) of 1 g or less, preferably 0.5 g or less, and more preferably 0.1 g or less. Therefore, the oil-soluble dye means so-called an oil-soluble dye insoluble in water.

Among the oil-soluble dyes that can be used in the present invention, any dye can be used as a yellow dye. Examples include arylazo dyes or heterylazo dyes having phenols, naphthols, anilines, pyrazolones, pyridones, and open-chain type active methylene compounds as coupling components; azomethine dyes having open-chain type active methylene compounds as coupling components; methine dyes such as benzylidene dyes or monomethineoxonol dyes; and quinone-based dyes such as naphthoquinone dyes and anthraquinone dyes. Examples of other dyes include quinophthalone dyes, nitro-nitroso dyes, acridine dyes and acridinone dyes.

Among the oil-soluble dyes that can be used in the present invention, any dye can be used as a magenta dye. Examples include arylazo dyes or heterylazo dyes having phenols, naphthols and anilines as coupling components; azomethine dyes having pyrazolones and pyrazolotriazoles as coupling components; methine dyes such as arylidene dyes, styryl dyes, merocyanine dyes, and oxonol dyes; carbonium dyes such as diphenylmethane dyes, triphenylmethane dyes and xanthene dyes; quinone-based dyes such as naphthoquinone, anthraquinone, and anthrapyridone; and condensed polycyclic dyes such as dioxazine dyes.

Among the oil-soluble dyes that can be applied to the present invention, any dye can be used as a cyan dye. Examples include indoaniline dyes, indophenol dyes, or azomethine dyes having pyrrolotriazoles as coupling components; polymethine dyes such as cyanine dyes, oxonol dyes and merocyanine dyes; carbonium dyes such as diphenylmethane dyes, triphenylmethane dyes, and xanthene dyes; phthalocyanine dyes; anthraquinone dyes; arylazo dyes or heterylazo dyes having phenols, naphthols and anilines as coupling components; and indigo·thioindigo dyes.

The various oil-soluble dyes may be dyes which initially develop various colors of yellow, magenta and cyan after a part of the chromophore (color-developing atomic group) is dissociated. The counter cation in that case may be a cation of an inorganic substance such as an alkali metal, may be a cation of an organic substance such as pyridinium or a quaternary ammonium salt, or may be a polymeric cation having those cations in the structure.

Specific preferred examples of the oil-soluble dye used in the present invention include C.I. Solvent·Black 3, 7, 27, 29 and 34; C.I. Solvent·Yellow 14, 16, 19, 29, 30, 56, 82, 93 and 162; C.I. Solvent·Red 1, 3, 8, 18, 24, 27, 43, 49, 51, 72, 73, 109, 122, 132 and 218; C.I. Solvent·Violet 3; C.I. Solvent·Blue 2, 11, 25, 35, 38, 67 and 70; C.I. Solvent·Green 3 and 7; and C.I. Solvent·Orange 2.

Particularly preferred examples include Nubian Black PC-0850, Oil Black HBB, Oil Yellow 129, Oil Yellow 105, Oil Pink 312, Oil Red 5B, Oil Scarlet 308, Vali Fast Blue 2606, Oil Blue BOS (available from Orient Chemical Industries Co., Ltd.); Aizen Spilon Blue GNH (available from Hodogaya Chemical Co., Ltd.); Neopen Yellow 075, Neopen Mazenta SE1378, Neopen Blue 808, Neopen Blue FF4012, and Neopen Cyan FF4238 (available from BASF SE).

Furthermore, according to the present invention, disperse dyes can also be used to the extent of dissolving the disperse dye in a hydrophobic organic solvent. Disperse dyes generally include water-soluble dyes, but according to the present invention, it is preferable to use the disperse dye to the extent of dissolving the disperse dye in a hydrophobic organic solvent.

Specific preferred examples of the disperse dye include C.I. Disperse Yellow 5, 42, 54, 64, 79, 82, 83, 93, 99, 100, 119, 122, 124, 126, 160, 184:1, 186, 198, 199, 201, 204, 224 and 237; C.I. Disperse Orange 13, 29, 31:1, 33, 49, 54, 55, 66, 73, 118, 119 and 163; C.I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356 and 362; C.I. Disperse Violet 33; C.I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365 and 368; and C.I. Disperse Green 6:1 and 9.

The (A) colorant that can be used in the present invention may be used individually, or two or more kinds may be used in combination.

According to the present invention, the content of the colorant can be appropriately selected according to the properties (specific gravity, coloring power, hue and the like) of the colorant, and the conditions relating to which colors should be combined to prepare the ink composition to produce print materials. However, from the viewpoints of opacifying power or coloring power, the content of the colorant is preferably 0.1 % by mass to 30 % by mass, more preferably 0.2 % by mass to 25 % by mass, and particularly preferably 0.3 % by mass to 20 % by mass, based on the total mass of the ink composition.

According to the present invention, the colorant may be incorporated by directly adding to the composition during the preparation of the ink composition, together with various components, but may also be incorporated after the colorant is added in advance to a general-purpose organic solvent (methyl ethyl ketone, toluene, butanol, butyl acetate or the like) or a liquid medium such as the radical polymerizable compound used in the present invention and is dispersed or dissolved therein. In order to avoid the problems attributable to the deterioration of solvent resistance occurring when the medium remains on cured images, and to residual volatile organic compounds (VOC), it is preferable to add the colorant to a radical polymerizable compound in advance and incorporate the mixture. Furthermore, when workability at the time of incorporation is considered, it is more preferable to select a low-viscosity radical polymerizable compound as the medium to be used.

According to the present invention, in the case of using the pigment as the colorant, it is preferable to mix the pigment and the dispersant, and then to add the mixture to the radical polymerizable compound to be dispersed therein, or it is preferable to mix the radical polymerizable compound and the dispersant, and then to add the pigment to the mixture to be dispersed therein. For the dispersing process, it is preferable to use various dispersing apparatuses such as, for example, a ball mill, a sand mill, a salt mill, an attritor, a roll mill, an agitator, a Henschel mixer, a colloid mill, an ultrasonic homogenizer, a pearl mill, a wet jet mill, and a paint shaker.

In the case of using the pigment as the colorant, it is preferable to select the pigment, the dispersant and the medium, and to set the dispersion conditions and the filtration conditions so that the average particle size of the pigment particles is preferably 0.005 µm to 0.5 µm, more preferably 0.01 µm to 0.45 µm, and even more preferably 0.015 µm to 0.4 µm. When the average particle size is in the range described above, clogging of the head nozzles can be suppressed, and the storage stability, transparency and curing rate of the ink composition can be maintained.

### (Component B) Radical polymerization initiator

The ink composition of the present invention includes (Component B) the radical polymerization initiator. The radical polymerization initiator includes (Component B-1) the compound represented by the formula (B-I), and (Component B-2) the compound represented by the formula (B-II).

In addition, the polymerization initiator according to the present invention also includes a compound which absorbs external energy such as an active radiation and produces a polymerization initiator compound, as well as a compound which absorbs a specific active radiation and accelerates the degradation of the polymerization initiator (so-called sensitizer).

### (Component B-1) Compound represented by formula (B-I)

The ink composition of the present invention includes, as the (Component B) radical polymerization initiator, (Component B-1) the compound represented by the formula (B-I) (hereinafter, also called compound (B-I)). 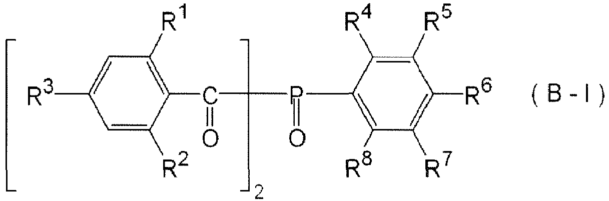 wherein in the formula (B-I), R¹ and R² each independently represent an alkyl group having 1 to 4 carbon atoms; R³ represents a hydrogen atom, a hydrocarbon group having 1 to 20 carbon atoms, or an alkoxy group having 1 to 20 carbon atoms; R⁴, R⁵, R⁶, R⁷ and R⁸ each independently represent a hydrogen atom, a halogen atom, a hydrocarbon group having 1 to 20 carbon atoms, or an alkoxy group having 1 to 20 carbon atoms; and R¹, R² and R³ that are present twice may be respectively identical with or different from each other.

In the formula (B-I), R¹ and R² each independently represent a linear or branched alkyl group having 1 to 4 carbon atoms, and R¹ and R² are each preferably an alkyl group having 1 to 3 carbon atoms, more preferably an ethyl group or a methyl group, and even more preferably a methyl group. R¹ and R² may be identical with or different from each other, but it is more preferable that they be the same.

In the formula (B-I), R³ represents a hydrogen atom, a hydrocarbon group having 1 to 20 carbon atoms, or an alkoxy group having 1 to 20 carbon atoms. Examples of the hydrocarbon group having 1 to 20 carbon atoms include a linear or branched alkyl group having 1 to 20 carbon atoms, an aryl group having 6 to 20 carbon atoms, and an aralkyl group having 7 to 20 carbon atoms. R³ is preferably an alkyl group having 1 to 12 carbon atoms, an aryl group having 6 to 10 carbon atoms, or an aralkyl group having 7 to 13 carbon atoms, more preferably an alkyl group having 1 to 4 carbon atoms, even more preferably a methyl group or an ethyl group, and most preferably a methyl group. The alkoxy group having 1 to 20 carbon atoms is a linear or branched alkoxy group having 1 to 20 carbon atoms, preferably an alkoxy group having 1 to 12 carbon atoms, more preferably an alkoxy group having 1 to 6 carbon atoms, even more preferably an alkoxy group having 1 to 4 carbon atoms, and particularly preferably a methoxy group or an ethoxy group.

Among these, R³ is preferably a methyl group.

Furthermore, R¹, R² and R³ that are present twice may be respectively identical with or different from each other, but from the viewpoint of synthesis, it is preferable that they be the same.

In the formula (B-I), R⁴, R⁵, R⁶, R⁷ and R⁸ each independently represent a hydrogen atom, a halogen atom, a hydrocarbon group having 1 to 20 carbon atoms, or an alkoxy group having 1 to 20 carbon atoms.

Examples of the halogen atom include a fluorine atom, a chlorine atom, a bromine atom, and an iodine atom, and a chlorine atom is preferred.

Examples of the hydrocarbon group having 1 to 20 carbon atoms include a linear or branched alkyl group having 1 to 20 carbon atoms, an aryl group having 6 to 20 carbon atoms, and an aralkyl group having 7 to 20 carbon atoms. The hydrocarbon group having 1 to 20 carbon atoms is preferably an alkyl group having 1 to 12 carbon atoms, an aryl group having 6 to 10 carbon atoms, or an aralkyl group having 7 to 13 carbon atoms, more preferably an alkyl group having 1 to 4 carbon atoms, even more preferably a methyl group or an ethyl group, and particularly preferably a methyl group.

The alkoxy group having 1 to 20 carbon atoms is preferably a linear or branched alkoxy group having 1 to 12 carbon atoms, more preferably an alkoxy group having 1 to 6 carbon atoms, even more preferably a methoxy group or an ethoxy group, and even more preferably a methoxy group.

Suitable examples of the compound represented by the formula (B-I) include bis(2,4,6-trimethylbenzoyl)phenylphosphine oxide; bis(2,6-dimethylbenzoyl)phenylphosphine oxide; bis(2,4,6-trimethylbenzoyl)-2-methoxyphenylphosphine oxide; bis(2,6-dimethylbenzoyl)-2-methoxyphenylphosphine oxide; bis(2,4,6-trimethylbenzoyl)-2,4-dimethoxyphenylphosphine oxide; bis(2,6-dimethylbenzoyl)-2,4-dimethoxyphenylphosphine oxide; bis(2,4,6-trimethylbenzoyl)-2,4-dipentyloxyphenylphosphine oxide; and bis(2,6-dimethylbenzoyl)-2,4-dipentyloxyphenylphosphine oxide.

Among these, bis(2,4,6-trimethylbenzoyl)phenylphosphine oxide represented by the following formula (B-I-1) is particularly suitable.

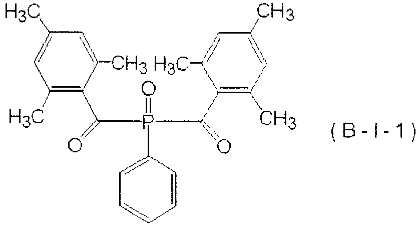

The content of the Component B-1 is from 1 % by mass to 7 % by mass based on the total mass of the ink composition. If the content of the Component B-1 is less than 1 % by mass, sufficient curability cannot be obtained. Furthermore, if the content of the Component B-1 is greater than 7 % by mass, inkjet dischargeability is poor.

The content of the Component B-1 is preferably 2 % by mass to 6 % by mass, and particularly preferably 2 % by mass to 5 % by mass.

The Component B-1 may be used individually, or two or more kinds may be used in combination. Meanwhile, when two or more kinds are used together, the total content of the components may be adjusted to the content range described above.

### (Component B-2) Compound represented by the formula (B-II)

The ink composition of the present invention includes, as the (Component B) radical polymerization initiator, (Component B-2) the compound represented by the formula (B-II) (hereinafter, also called compound (B-II)). 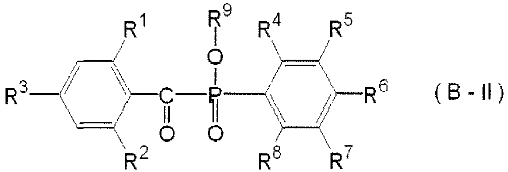 wherein in the formula (B-II), R¹ and R² each independently represent an alkyl group having 1 to 4 carbon atoms; R³ represents a hydrogen atom, a hydrocarbon group having 1 to 20 carbon atoms, or an alkoxy group having 1 to 20 carbon atoms; R⁴, R⁵, R⁶, R⁷ and R⁸ each independently represent a hydrogen atom, a halogen atom, a hydrocarbon group having 1 to 20 carbon atoms, or an alkoxy group having 1 to 20 carbon atoms; and R⁹ represents a hydrocarbon group having 1 to 20 carbon atoms.

Here, R¹ to R⁸ in the formula (B-II) have the same meanings as R¹ to R⁸ for the formula (B-I), and preferred examples of R¹ to R⁸ are also the same.

R⁹ represents a hydrocarbon group having 1 to 20 carbon atoms, and examples of the hydrocarbon group having 1 to 20 carbon atoms include a linear or branched alkyl group having 1 to 20 carbon atoms, an aryl group having 6 to 20 carbon atoms, and an aralkyl group having 7 to 20 carbon atoms. R⁹ is preferably an alkyl group having 1 to 12 carbon atoms, an aryl group having 6 to 10 carbon atoms, or an aralkyl group having 7 to 13 carbon atoms, more preferably an alkyl group having 1 to 4 carbon atoms, and even more preferably a methyl group or an ethyl group.

Examples of the compound represented by the formula (B-II) include 2,4,6-trimethylbenzoylethoxyphenylphosphine oxide; 2,6-dimethylbenzoylethoxyphenylphosphine oxide; 2,4,6-trimethylbenzoylmethoxyphenylphosphine oxide; 2,6-dimethylbenzoylmethoxyphenylphosphine oxide; 2,4,6-trimethylbenzoyl-(4-pentyloxyphenyl)phenylphosphine oxide; and 2,6-dimethylbenzoyl-(4-pentyloxyphenyl)phenylphosphine oxide.

Among these, 2,4,6-trimethylbenzoylethoxyphenylphosphine oxide represented by the following formula (B-II-1) is particularly suitable.

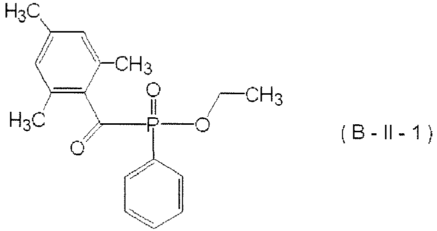

The content of the Component B-2 is from 1 % by mass to 14 % by mass based on the total mass of the ink composition. If the content of the Component B-2 is less than 1 % by mass, sufficient glossiness cannot be obtained. Furthermore, if the content of the Component B-2 is greater than 14 % by mass, uniform curability is not obtained.

The content of the Component B-2 is preferably 1 % by mass to 12 % by mass, and particularly preferably 3 % by mass to 10 % by mass.

The Component B-2 may be used individually, or two or more kinds may be used in combination. When two or more kinds are used together, the total content may be adjusted to the content range described above.

The ink composition of the present invention preferably further includes, as the (Component B) radical polymerization initiator, (Component B-3) a compound represented by formula (B-III) and/or (Component B-4) a compound represented by formula (B-IV). When the ink composition includes the compound represented by the formula (B-III) and/or the compound represented by the formula (B-IV), curability and glossiness are enhanced. 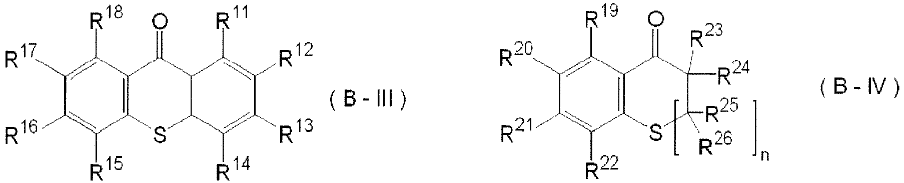 wherein in the formula (B-III) and formula (B-IV), R¹¹ to R²⁶ each independently represent a hydrogen atom or a monovalent substituent; and n represents 0 or 1.

### (Component B-3) Compound represented by the formula (B-III)

The ink composition of the present invention preferably includes (Component B-3) the compound represented by the formula (B-III). 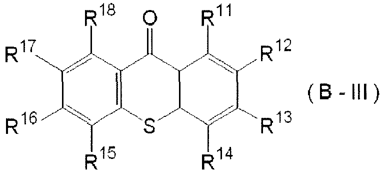 wherein in the formula (B-III), R¹¹ to R¹⁸ each independently represent a hydrogen atom or a monovalent substituent.

In regard to the formula (B-III), examples of the monovalent substituent for R¹¹, R¹², R¹³, R¹⁴, R¹⁵, R¹⁶, R¹⁷ and R¹⁸ include an alkyl group, a halogen atom, a hydroxyl group, a cyano group, a nitro group, an amino group, an alkylthio group, an alkylamino group (including the cases of monosubstitution and disubstitution. The same shall apply hereinafter.), an alkoxy group, an alkoxycarbonyl group, an acyloxy group, an acyl group, a carboxyl group, and a sulfo group. The carbon number of the alkyl moiety in the alkyl group, alkylthio group, alkylamino group, alkoxy group, alkoxycarbonyl group, acyloxy group and acyl group is preferably 1 to 20, more preferably 1 to 8, and even more preferably 1 to 4.

R¹¹, R¹², R¹³, R¹⁴, R¹⁵, R¹⁶, R¹⁷ and R¹⁸ may be such that any two of them that are adjacent to each other are linked together and form a ring. The ring structure in the case where these substituents form a ring may be a 5-membered or 6-membered aliphatic ring, aromatic ring or the like, and the ring may be a heterocyclic ring containing elements other than carbon atoms. Furthermore, the rings thus formed may be further combined and form a binuclear ring, for example, a fused ring. These ring structures may further have substituents. Examples of the substituents include a halogen atom, a hydroxyl group, a cyano group, a nitro group, an amino group, an alkylthio group, an alkylamino group, an alkoxy group, an alkoxycarbonyl group, an acyloxy group, an acyl group, a carboxyl group and a sulfo group. Examples of the heteroatom in the case where the ring structure thus formed is a heterocyclic ring include N, O and S.

Examples of the compound represented by the formula (B-III) include thioxanthone, 2-isopropylthioxanthone, 4-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-methoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-arylthioxanthon-3,4-dicarboximide, n-octylthioxanthon-3,4-dicarboxyimide, N-(1,1,3,3-tetramethylbutyl)thioxanthon-3,4-dicarboxyimide, 1-phenoxythioxanthone, 6-ethoxycarbonyl-2-methoxythioxanthone, 6-ethoxycarbonyl-2-methylthioxanthone, thioxanthon-2-polyethylene glycol ester, and 2-hydroxy-3-(3,4-dimethyl-9-oxo-9H-thioxanthon-2-yloxy)-N,N,N-trimethyl-1-propanaminiu m chloride.

Among these, from the viewpoints of surface curability, adhesiveness, image quality and anti-blocking properties, diethylthioxanthone or isopropylthioxanthone is preferred, and isopropylthioxanthone (including the 2-position, the 4-position, and/or a mixture thereof) is particularly preferred.

### (Component B-4) Compound represented by the formula (B-IV)

The ink composition of the present invention preferably includes (Component B-4) the compound represented by the formula (B-IV). 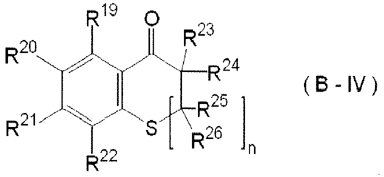 wherein in the formula (B-IV), R¹⁹ to R²⁶ each independently represent a hydrogen atom or a monovalent substituent; and n represents 0 or 1.

In regard to the formula (B-IV), the monovalent substituent for R¹⁹, R²⁰, R²¹, R²², R²³, R²⁴, R²⁵ and R²⁶ represents an alkyl group, a halogen atom, a hydroxyl group, a cyano group, a nitro group, an amino group, an alkylthio group, an alkylamino group, an alkoxy group, an alkoxycarbonyl group, an acyloxy group, an acyl group, a carboxyl group or a sulfo group. The carbon number of the alkyl moiety in the alkyl group, alkylthio group, alkylamino group, alkoxy group, alkoxycarbonyl group, acyloxy group and acyl group is preferably 1 to 20, more preferably 1 to 8, and even more preferably 1 to 4.

R^{19,} R²⁰, R²¹ and R²² may be such that any two of them that are adjacent to each other may be linked together and, for example, condensed to form a ring.

The ring structure in the case where these substituents form a ring may be a 5-membered or 6-membered aliphatic ring, aromatic ring or the like, and the ring may be a heterocyclic ring containing elements other than carbon atoms. Furthermore, the rings thus formed may be further combined and form a binuclear ring, for example, a fused ring. These ring structures may further have substituents. Examples of the substituent include those described above for the formula (B-III). Examples of the heteroatom in the case where the ring structure thus formed is a heterocyclic ring include N, O and S.

Furthermore, the compound of the Component B-4 is preferably a compound having at least one substituent (an alkyl group, a halogen atom, a hydroxyl group, a cyano group, a nitro group, an amino group, an alkylthio group, an alkylamino group, an alkoxy group, an alkoxycarbonyl group, an acyloxy group, an acyl group, a carboxyl group, a sulfo group or the like) on the ring structure of thiochromanone. The substituent is preferably an alkyl group, a halogen atom, a hydroxyl group, an alkylthio group, an alkylamino group, an alkoxy group, or an acyloxy group, more preferably an alkyl group having 1 to 20 carbon atoms or a halogen atom, and even more preferably an alkyl group having 1 to 4 carbon atoms or a halogen atom.

Furthermore, the Component B-4 is more preferably a compound having at least one substituent respectively on the aromatic ring and on the cyclohexanone ring.

n is 0 or 1, and is more preferably 1.

Specific preferred examples of the Component B-4 include compounds of the following formulas (1-1) to (1-31). Among these, compounds of formulas (1-14), (1-17) and (I-19) are more preferable, and a compound of formula (1-14) is particularly preferable.

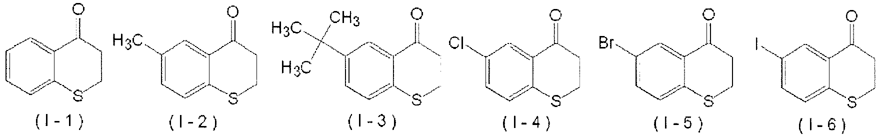

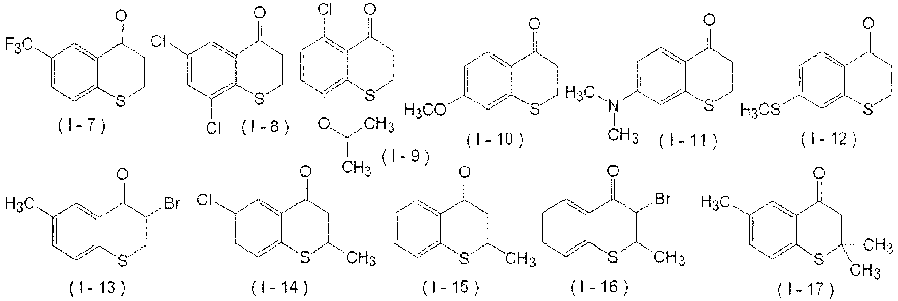

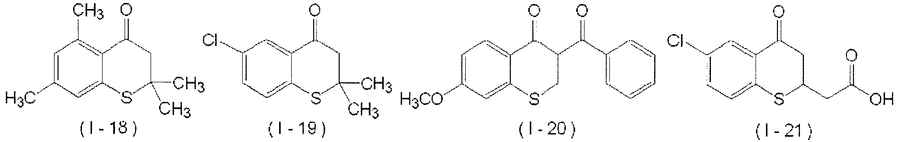

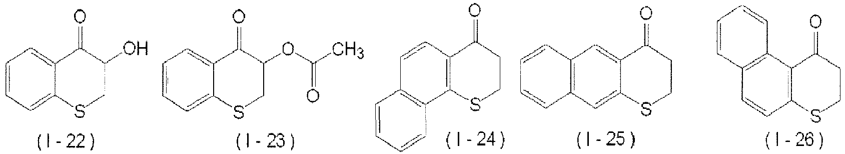

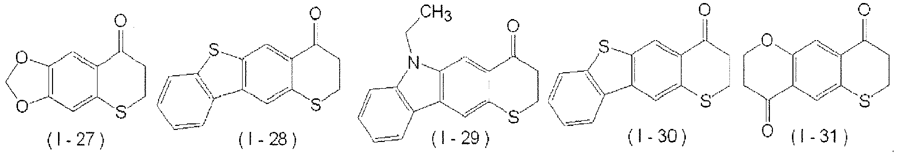

The Component B-3 may be used individually, or two or more kinds may be used in combination. Furthermore, the Component B-4 may be used individually, or two or more kinds may be used in combination.

The ink composition of the present invention preferably includes the Component B-3 and/or the Component B-4, and more preferably includes the Component B-3 or the Component B-4.

The total content of the Component B-3 and the total content of the Component B-4 in the ink composition of the present invention are appropriately selected in accordance with the color of the ink composition to be used, the kind and content of the other polymerization initiator to be combined, and the kind of the Component B-3 and/or Component B-4 to be used. However, the total content is preferably 0.1 % by mass to 8 % by mass, more preferably 0.4 % by mass to 7 % by mass, and even more preferably 0.8 % by mass to 6 % by mass.

### (Component B-5) Other radical polymerization initiator

According to the present invention, the ink composition may include (Component B-5) another radical polymerization initiator, in addition to the Component B-1 to Component B-4.

Examples of the other radical polymerization initiator include aromatic ketones, aromatic onium salt compounds, organic peroxides, thio compounds, hexaarylbiimidazole compounds, keto-oxime ester compounds, borate compounds, azinium compounds, metallocene compounds, active ester compounds, and compounds having carbon-halogen bonds. Among these, from the viewpoint of curability, aromatic ketones are preferred.

As the aromatic ketone, an α-phosphoketone (for example, 2,4,6-trimethylbenzoyldiphenylphosphine oxide), or an α-hydroxyketone and/or an α-aminoketone is preferred. As the α-hydroxyketone, known compounds can be used, but examples include 1-[4-(2-hydroxyethoxy)phenyl]-2-hydroxy-2-methyl-1-propan-1-one, 2-hydroxy-2-methyl-1-phenylpropan-1-one, 1-hydroxycyclohexyl phenyl ketone, and among these, 1-hydroxycyclohexyl phenyl ketone is preferred. Meanwhile, according to the present invention, 1-hydroxycyclohexyl phenyl ketone also includes compounds in which 1-hydroxycyclohexyl phenyl ketone is substituted with an arbitrary substituent. The substituent can be arbitrarily selected to the extent that the compound can exhibit its ability as a radical polymerization initiator, and a specific example may be an alkyl group having 1 to 4 carbon atoms.

Furthermore, as the α-aminoketone, known compounds can be used, but the α-aminoketone is preferably a compound represented by the following formula (5): 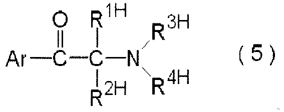 wherein in the formula (5), Ar represents a phenyl group substituted with -SR¹³ or -N(R^{7H})(R^{8H}); R¹³ represents a hydrogen atom or an alkyl group; R^{1H} and R^{2H} each independently represent an alkyl group having 1 to 8 carbon atoms; R^{3H} and R^{4H} each independently represent a hydrogen atom, an alkyl group having 1 to 12 carbon atoms, a C₁₋₄ alkoxy-substituted alkyl group having 2 to 4 carbon atoms, or an alkenyl group having 3 to 5 carbon atoms; R^{1H} and R^{2H} may be linked to each other and constitute an alkylene group having 2 to 9 carbon atoms; R^{3H} and R^{4H} may be linked to each other and constitute an alkylene group having 3 to 7 carbon atoms, and the alkylene group may contain -O- or -N(R¹²)- in the alkylene chain; R¹² represents an alkyl group having 1 to 4 carbon atoms; R^{7H} and R^{8H} each independently represent a hydrogen atom, an alkyl group having 1 to 12 carbon atoms, a C₁₋₄ alkoxy-substituted alkyl group having 2 to 4 carbon atoms, or an alkenyl group having 3 to 5 carbon atoms; R^{7H} and R^{8H} may be linked to each other to form an alkylene group having 3 to 7 carbon atoms, and the alkylene group may contain -O- or -N(R¹²)- in the alkylene chain, wherein R¹² has the same meaning as defined above.

Examples of the α-aminoketone include 2-methyl-1-phenyl-2-morpholinopropan-1-one, 2-methyl-1-[4-(hexyl)phenyl]-2-morpholinopropan-1-one, and 2-ethyl-2-dimethylamino-1-(4-morpholinophenyl)butan-1-one. Furthermore, preferred examples also include commercially available products such as IRGACURE 907, IRGACURE 369, and IRGACURE 379 available from BASF Japan, Ltd.

The ink composition of the present invention may also use a known sensitizer as the other radical polymerization initiator other than the Component B-1 to Component B-4.

Examples of the sensitizer include polynuclear aromatics (for example, pyrene, perylene, triphenylene, and 2-ethyl-9,10-dimethoxyanthracene), xanthenes (for example, fluorescein, eosin, erythrosin, rhodamine B, and Rose Bengal), cyanines (for example, thiocarbocyanine, and oxacarbocyanine), merocyanines (for example, merocyanine, and carbomerocyanine), thiazines (for example, thionine, Methylene Blue, and Toluidine Blue), acridines (for example, Acridine Orange, chloroflavin, and acriflavin), anthraquinones (for example, anthraquinone), squaliums (for example, squalium), and coumarins (for example, 7-diethylamino-4-methylcoumarin).

Furthermore, the sensitizer may be used individually, or two or more kinds may be used in combination.

The total content of the polymerization initiator in the ink composition is preferably 2 % by mass to 30 % by mass, more preferably 5 % by mass to 26 % by mass, and even more preferably 10 % by mass to 22 % by mass.

When the total content is in the range described above, the ink composition can be sufficiently cured, and a cured film having a uniform degree of curing can be obtained.

### (Component C) Radical polymerizable compound

The ink composition of the present invention includes (Component C) a radical polymerizable compound. The ink composition includes, as the (Component C) radical polymerizable compound, a compound represented by the formula (C-2) or a compound represented by the formula (C-4), and optionally a compound represented by the formula (C-1) and/or a compound represented by the formula (C-3): 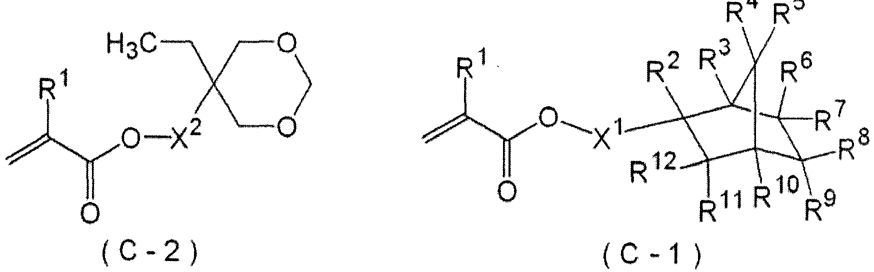 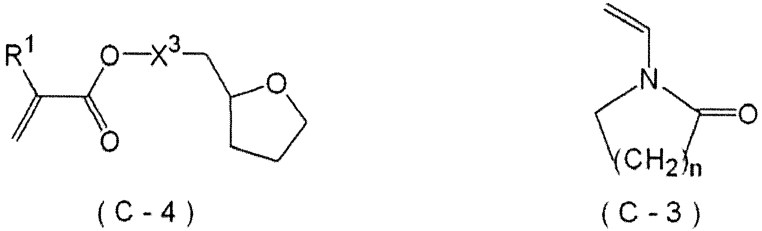 wherein in the formula (C-2) and formula (C-4), R¹ represents a hydrogen atom or a methyl group; X², and X³ each represent a single bond or a divalent linking group, wherein in the formula (C-1) and formula (C-3), R¹ represents a hydrogen atom or a methyl group; X¹ represents a single bond or a divalent linking group: R² to R¹² each independently represent a hydrogen atom or an alkyl group; and n represents an integer from 1 to 5.

Hereinafter, the compounds represented by the formula (C-1) to formula (C-4) will be described in detail.

### (Component C-1) Compound represented by the formula (C-1)

The ink composition of the present invention preferably includes (Component C-1) the compound represented by the formula (C-1).

When the ink composition includes the Component C-1, images having excellent glossiness and less streak unevenness can be obtained. 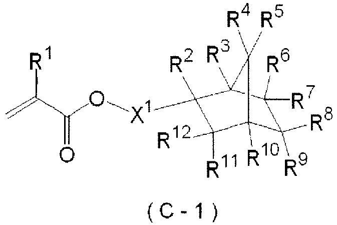 wherein in the formula (C-1), R¹ represents a hydrogen atom or a methyl group; X¹ represents a single bond or a divalent linking group; and R² to R¹² each independently represent a hydrogen atom or an alkyl group.

The compound represented by the formula (C-1) may be an acrylate compound or a methacrylate compound, but an acrylate compound is preferred, that is, R¹ is preferably a hydrogen atom.

The divalent linking group for X¹ in the formula (C-1) is not particularly limited as long as the effect of the invention is not seriously impaired. However, the divalent linking group is preferably a divalent hydrocarbon group, or a divalent group obtained by combining a hydrocarbon group and an ether bond, and more preferably a divalent hydrocarbon group, or a poly(alkyleneoxy) group, or a poly(alkyleneoxy)alkyl group. Furthermore, the number of carbon atoms of the divalent linking group is preferably 1 to 60, and more preferably 1 to 40.

X¹ in the formula (C-1) is preferably a single bond, a divalent hydrocarbon group, or a divalent group obtained by combining a hydrocarbon group and an ether bond; more preferably a single bond, or a divalent hydrocarbon group; and particularly preferably a single bond.

The alkyl group for R² to R¹² of the formula (C-1) is preferably an alkyl group having 1 to 8 carbon atoms, more preferably an alkyl group having 1 to 4 carbon atoms, and particularly preferably a methyl group. Furthermore, the alkyl group for R² to R¹² may be linear or branched, and may also have a ring structure.

R² to R¹² in the formula (C-1) are preferably each independently a hydrogen atom or an alkyl group having 1 to 8 carbon atoms; more preferably a hydrogen atom or an alkyl group having 1 to 4 carbon atoms; and even more preferably a hydrogen atom or a methyl group.

Furthermore, it is particularly preferable that R² to R¹² in the formula (C-1) be all hydrogen atoms, or that R³ to R⁵ be methyl groups, while R² and R⁶ to R¹² be hydrogen atoms; and it is most preferable that R³ to R⁵ be methyl groups, while R² and R⁶ to R¹² be hydrogen atoms.

Specific preferred examples of the compound represented by the formula (C-1) include compounds (C-1-1) to (C-1-6) shown below, but the present invention is not limited to these compounds.

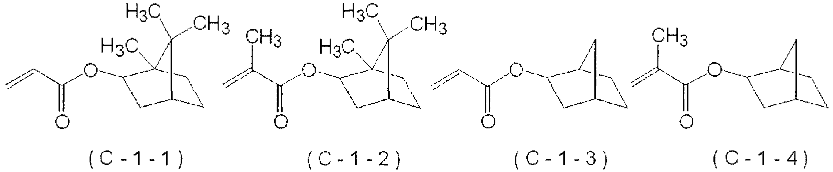

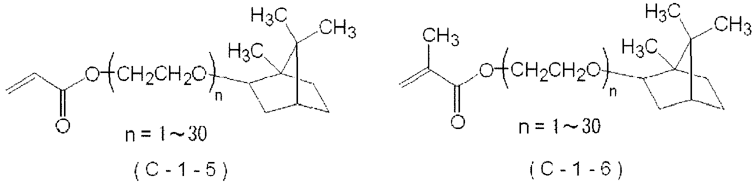

Among these, isobornyl acrylate (C-1-1), isobornyl methacrylate (C-1-2), norbornyl acrylate (C-1-3) and norbornyl methacrylate (C-1-4) are preferable; isobornyl acrylate (C-1-1) and isobornyl methacrylate (C-1-2) are more preferable; and isobornyl acrylate (C-1-1) is particularly preferable.

The content of the compound represented by the formula (C-1) in the ink composition of the present invention is preferably 2 % by mass to 40 % by mass, more preferably 6 % by mass to 35 % by mass, and even more preferably 10 % by mass to 30 % by mass, based on the total mass of the ink composition. When the content is 2 % by mass or greater, the adhesiveness to recording media and the glossiness of images obtainable with the ink composition are excellent. Furthermore, when the content is 40 % by mass or less, the curing rate is superior.

### (Component C-2) Compound represented by the formula (C-2)

The ink composition of the present invention preferably includes (Component C-2) a compound represented by the formula (C-2).

When the ink composition of the present invention includes the Component C-2, images having excellent glossiness and less streak unevenness may be obtained. Furthermore, adhesiveness to base materials such as polyethylene terephthalate (PET) or an acrylic resin is excellent. 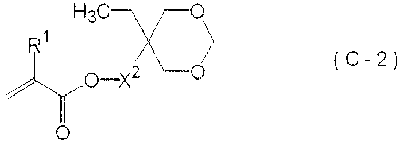 wherein in the formula (C-2), R¹ represents a hydrogen atom or a methyl group; and X² represents a single bond or a divalent linking group.

The compound represented by the formula (C-2) may be an acrylate compound or a methacrylate compound, but an acrylate compound is preferred, that is, R¹ is preferably a hydrogen atom.

The divalent linking group for X² in the formula (C-2) is not particularly limited as long as the effect of the invention is not seriously impaired. However, the divalent linking group is preferably a divalent hydrocarbon group, or a divalent group obtained by combining a hydrocarbon group and an ether bond, and more preferably a divalent hydrocarbon group, or a poly(alkyleneoxy) group, or a poly(alkyleneoxy)alkyl group. Furthermore, the number of carbon atoms of the divalent linking group is preferably 1 to 60, and more preferably 1 to 20.

X² in the formula (C-2) is preferably a single bond, a divalent hydrocarbon group, or a divalent group, or a divalent group obtained by combining a hydrocarbon group and an ether bond; more preferably a divalent hydrocarbon group having 1 to 20 carbon atoms; even more preferably a divalent hydrocarbon group having 1 to 8 carbon atoms; and particularly preferably a methylene group.

Specific preferred examples of the compound represented by the formula (C-2) include the compounds (C-2-1) to (C-2-4) shown below, but the present invention is not limited to these.

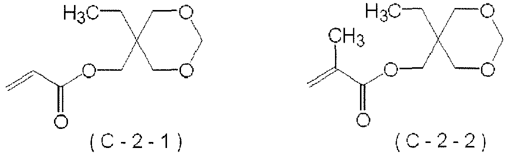

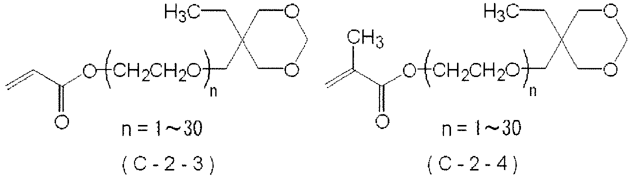

Among these, cyclic trimethylolpropane formal acrylate (C-2-1) and cyclic trimethylolpropane formal methacrylate (C-2-2) are preferable; and cyclic trimethylolpropane formal acrylate (C-2-1) is particularly preferable.

The content of the compound represented by the formula (C-2) in the ink composition of the present invention is preferably 4 % by mass to 50 % by mass, more preferably 8 % by mass to 45 % by mass, even more preferably 12 % by mass to 40 % by mass, and particularly preferably 16 % by mass to 37 % by mass, based on the total mass of the ink composition. When the content is 4 % by mass or greater, the adhesiveness to recording media and the glossiness of images obtainable with the ink composition are excellent. Furthermore, when the content is 50 % by mass or less, the curing rate is faster.

### (Component C-3) Compound represented by the formula (C-3)

The ink composition of the present invention preferably includes (Component C-3) the compound represented by the formula (C-3): 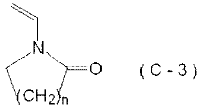 In the formula (C-3), n represents an integer from 1 to 5. From the viewpoints of the flexibility after the ink composition is cured, the adhesiveness to recording media and supports, and the availability of the raw materials, n is preferably an integer from 2 to 4, n is more preferably 2 or 4, and n is particularly preferably 4, that is, the compound represented by the formula (C-3) is N-vinylcaprolactam. N-vinylcaprolactam is preferable because the compound has excellent safety, is useful for general purposes, and is available at a relatively low price, and particularly satisfactory ink curability and particularly satisfactory adhesiveness of the cured film to recording media or supports are obtained.

The content of the Component C-3 in the ink composition of the present invention is preferably 5 % by mass to 35 % by mass, more preferably 10 % by mass to 30 % by mass, and even more preferably 15 % by mass to 25 % by mass, based on the total mass of the ink composition. When the content is 5 % by mass or greater, the adhesiveness to recording media is excellent. Furthermore, when the content is 35 % by mass or less, the ink dischargeability is excellent.

### (Component C-4) Compound represented by the formula (C-4)

The ink composition of the present invention preferably includes (Component C-4) the compound represented by formula (C-4). 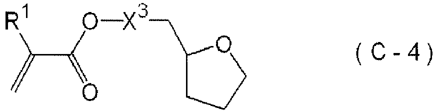 wherein in the formula (C-4), R¹ represents a hydrogen atom or a methyl group; and X³ represents a single bond or a divalent linking group.
R¹ in the formula (C-4) represents a hydrogen atom or a methyl group, and from the viewpoint of the curing rate, a hydrogen atom is preferable.
X³ in the formula (C-4) represents a single bond or a divalent linking group.

A preferred structure of X³ is the same as that of X² in the formula (C-2).

From the viewpoints of the curing rate of the ink composition and the adhesiveness to base materials, X³ is preferably a single bond. Furthermore, from the viewpoint of flexibility, X³ is preferably -R⁶-O-, -R⁶-COO-, -R⁶-NR⁷COO-, or a group obtained by combining these; and more preferably -R⁶-O-, -R⁶-COO- (wherein R⁶ represents a linear or branched alkyl group having 1 to 5 carbon atoms), or a group obtained by combining two or more of these.

Specific examples of the compound represented by the formula (C-4) are shown below, but the present invention is not limited to these.

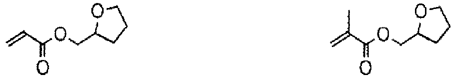

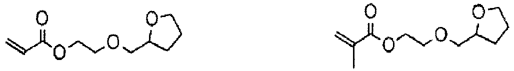

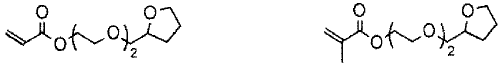

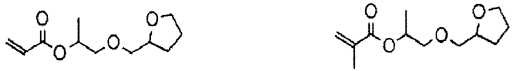

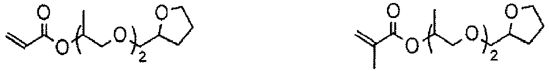

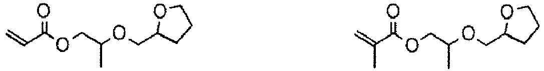

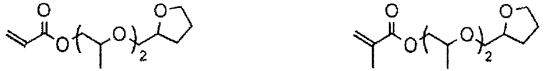

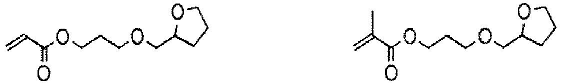

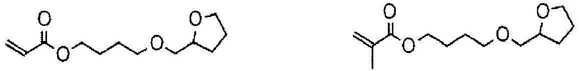

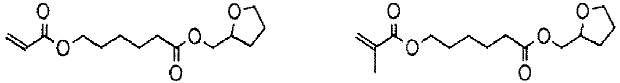

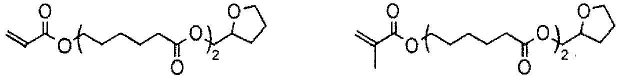

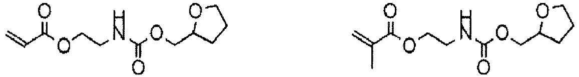

Furthermore, the compound represented by the formula (C-4) is available as, for example, SR285, CD611, SR203 (all available from Sartomer Japan, Inc.), and KAYARAD TC-110S (available from Nippon Kayaku Co., Ltd.).

The content of the Component C-4 in the ink composition of the present invention is preferably in the range of 5 % by mass to 40 % by mass, more preferably in the range of 10 % by mass to 35 % by mass, and even more preferably in the range of 15 % by mass to 30 % by mass, based on the total mass of the ink composition. When the content is 5 % by mass or greater, the adhesiveness to recording media is excellent, and when the content is 40 % by mass or less, the curing rate is faster.

Furthermore, the compounds represented by the formula (C-2) or formula (C-4) can be produced by the conventionally known synthesis methods described in, for example, US3087962A; J. Chem. Soc., Chem. Commun., Vol. 14, pp. 1073-1074 (1986); US4097677A; and New Journal of Chemistry, Vol. 17, No. 12, pp. 835 to 841 (1993).

It is preferable that the ink composition includes at least two compounds. The ink composition more preferably includes the compound represented by the formula (C-2) and optionally the compound represented by the formula (C-3); particularly preferably includes the compound represented by the formula (C-2) and optionally the compound represented by the formula (C-3) and at least any one of the compound represented by the formula (C-1) and the compound represented by the formula (C-4); and most preferably includes at least the compound represented by the formula (C-2), the compound represented by the formula (C-3) and the compound represented by the formula (C-1).

The ink composition of the present invention includes the compound represented by the formula (C-1), the compound represented by the formula (C-2), the compound represented by the formula (C-3), and the compound represented by the formula (C-4), in an amount in total of 20 % by mass or greater, preferably 50 % by mass or greater, and more preferably 80 % by mass or greater, based on the total amount of the (Component C) radical polymerizable compound.

When the (Component C) radical polymerizable compound has a constitution as described above, the curability, the adhesiveness to recording media, and glossiness are excellent, which is preferable.

### (Component C-5) Other polymerizable compound

The ink composition of the present invention is not limited to the Component (C-1) to Component (C-4) and may further include a polymerizable compound other than these four kinds.

The other polymerizable compound includes a radical polyfunctional polymerizable compound.

As the other polymerizable compound, any known polymerizable compound can be used, and examples include (meth)acrylate compounds, vinyl ether compounds, allyl compounds, N-vinyl compounds, and unsaturated carboxylic acids other than the Component C-1, Component C-2, Component C-3 and Component C-4. For example, the radical polymerizable monomers described in JP2009-221414A, the polymerizable compounds described in JP2009-209289A, and the ethylenically unsaturated compounds described in JP2009-191183A may be used.

The other polymerizable compound is preferably a (meth)acrylate compound, and more preferably an acrylate compound.

Specific preferred examples of the other polymerizable compound include phenoxyethyl (meth)acrylate and propylene oxide (PO)-modified neopentyl glycol di(meth)acrylate.

The ink composition of the present invention includes a polyfunctional polymerizable compound, and more preferably a polyfunctional (meth)acrylate compound, as the other polymerizable compound.

As the other polymerizable compound, the ink composition preferably includes a monofunctional (meth)acrylate compound having an aromatic group. The cyclic structure of the aromatic group of the monofunctional (meth)acrylate compound having an aromatic group may contain heteroatoms such as O, N and S.

Preferred examples of the aromatic ring structure that may be carried by the monofunctional (meth)acrylate compound having an aromatic group include ring structures selected from the group consisting of benzene, naphthalene, anthracene, indene, fluorene, 1H-phenalene, phenanthrene, triphenylene, pyrene, naphthacene, tetraphene, biphenyl, as-indacene, s-indacene, acenaphthylene, fluoranthene, acephenanthrylene, aceanthrylene, chrysene, pleiadene, furan, thiophene, pyrroline, pyrazoline, imidazoline, isoxazoline, isothiazoline, pyridine, pyridazine, pyrimidine, pyrazine, triazole, and tetrazole.

Among these, phenoxyethyl (meth)acrylate is particularly preferable as the monofunctional (meth)acrylate compound having an aromatic group.

Examples of the other polymerizable compound are radical polymerizable compounds, including unsaturated carboxylic acids such as acrylic acid, methacrylic acid, itaconic acid, crotonic acid, isocrotonic acid, and maleic acid; salts thereof, anhydrides having an ethylenically unsaturated group, acrylonitrile, styrene, and various unsaturated polyesters, unsaturated polyethers, unsaturated polyamides, and unsaturated urethanes.

Specific examples of the other polymerizable compound include (meth)acrylic acid derivatives such as 2-ethylhexyl (meth)acrylate, 2-hydroxyethyl (meth)acrylate, butoxyethyl (meth)acrylate, carbitol (meth)acrylate, cyclohexyl (meth)acrylate, tetrahydrofurfuryl (meth)acrylate, benzyl (meth)acrylate, methyl (meth)acrylate, n-butyl (meth)acrylate, allyl (meth)acrylate, glycidyl (meth)acrylate, dimethylaminomethyl (meth)acrylate, bis(4-(meth)acryloxypolyethoxyphenyl)propane, neopentyl glycol di(meth)acrylate, PO-modified neopentyl glycol di(meth)acrylate, 1,6-hexanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol diacrylate, pentaerythritol tri(meth)acrylate, pentaerythritol tetra(meth)acrylate, dipentaerythritol tetra(meth)acrylate, trimethylolethane tri(meth)acrylate, trimethylolpropane tri(meth)acrylate, tetramethylolmethane tetra(meth)acrylate, oligo-ester (meth)acrylate, 2,2-bis(4-(meth)acryloxypolyethoxyphenyl)propane, N-methylol (meth)acrylamide, diacetone (meth)acrylamide, and epoxy (meth)acrylate; and other derivatives of allyl compounds such as allyl glycidyl ether, diallyl phthalate, and triallyl trimellitate.

Among these, PO-modified neopentyl glycol di(meth)acrylate is preferable.

More specifically, use can be made of those commercially available products described in Yamashita, Shinzo, ed., "Kakyozai Handobukku (Crosslinking Agent Handbook)" (1981, Taiseisha, Ltd.); Kato, Kiyoshi, ed., "UV-EB Koka Handobukku (UV-EB Curing Handbook (Raw Materials))" (1985, Kobunshi Kankoukai); RadTech Japan, ed., "UV-EB Koka Gijutsu no Oyo to Shijyo (Application and Market of UV-EB Curing Technology)", p. 79 (1989, CMC Publishing, Inc.); Takiyama, Eichiro, "Poriesuteru Jushi Handobukku (Polyester Resin Handbook)" (1988, The Nikkan Kogyo Shimbun, Ltd.), and the like, or radical polymerizable or crosslinkable monomers, oligomers (for example, CN964A85) and polymers that are known in the art.

The molecular weight of the other polymerizable compound is preferably 80 to 2,000, more preferably 80 to 1,000, and even more preferably 80 to 800.

When the ink composition of the present invention includes another polymerizable compound, the content of the other polymerizable compound in the ink composition of the present invention is preferably 1 % by mass to 30 % by mass, more preferably 3 % by mass to 25 % by mass, and particularly preferably 5 % by mass to 20 % by mass, based on the total mass of the ink composition.

The ink composition of the present invention includes the polyfunctional polymerizable compound. The content of the polyfunctional polymerizable compound is 1 % by mass to 20 % by mass, preferably 2 % by mass to 10 % by mass, and more preferably 3 % by mass to 7 % by mass, based on the total mass of the ink composition.

The ink composition of the present invention may include a surfactant, a dispersant, and other components.

### <Surfactant>

From the viewpoints of glossiness and suppressing streak unevenness, the ink composition of the present invention does not include a silicone-based surfactant and a fluorine-based surfactant, or the total content of a silicone-based surfactant and a fluorine-based surfactant is preferably greater than 0 % by mass and equal to or less than 0.1 % by mass, and more preferably greater than 0 % by mass and equal to or less than 0.05 % by mass.

In addition, examples of a surfactant other than the silicone-based surfactant and the fluorine-based surfactant include those described in JP1987-173463A (JP-S62-173463A) and JP1987-183457A(JP-S62-183457A). For example, anionic surfactants such as dialkylsulfosuccinic acid salts, alkylnaphthalenesulfonic acid salts, and fatty acid salts; nonionic surfactants such as polyoxyethylene alkyl ethers, polyoxyethylene alkyl allyl ethers, acetylene glycols, and polyoxyethylene-polyoxypropylene block copolymers; and cationic surfactants such as alkylamine salts, and quaternary ammonium salts.

The content of the surfactant other than the silicone-based surfactant and fluorine-based surfactant in the ink composition of the present invention is preferably 0 % by mass to 0.1 % by mass, and more preferably 0 % by mass to 0.05 % by mass, based on the total mass of the ink composition. Particularly preferably, the ink composition does not include the surfactant.

When drawing is carried out, particularly in a multi-pass mode, using an ion composition containing a surfactant that decreases the surface energy of cured films, it is speculated that the contact angle of the liquid droplet overstricken on the ink composition that has been ejected dropwise in advance and cured or semi-cured, is greatly increased, and thereby the glossiness of images is deteriorated.

### <Dispersant>

In the ink composition of the present invention, when a pigment is used as the colorant, it is preferable that the ink composition include a dispersant in order to disperse the pigment stably in the ink composition.

The dispersant that can be used in the present invention is preferably a polymeric dispersant. Meanwhile, the term "polymeric dispersant" as used in the present invention means a dispersant having a weight average molecular weight of 1,000 or greater.

The main chain skeleton of the polymeric dispersant is not particularly limited, but examples include a polyurethane skeleton, a polyacrylic skeleton, a polyester skeleton, a polyamide skeleton, a polyimide skeleton, and a polyurea skeleton. From the viewpoint that the ink composition has excellent storage stability, a polyurethane skeleton, a polyacrylic skeleton and a polyester skeleton are preferable. Furthermore, the structure of the polymeric dispersant is also not particularly limited, but examples include a random structure, a block structure, a comb-like structure, and a star-shaped structure, and similarly, from the viewpoint of storage stability, a block structure and a comb-like structure are preferable.

Examples of the polymeric dispersant include the wetting dispersants DISPERBYK series 101, 102, 103, 106, 108, 109, 110, 111, 112, 116, 130, 140, 142, 145, 161, 162, 163, 164, 166, 167, 168, 170, 171, 174, 180, 182, 183, 184, 185, 2000, 2001, 2020, 2050, 2070, 2096, and 2150 commercially available from BYK Chemie GmbH; EFKA series 4008, 4009, 4010, 4015, 4020, 4046, 4047, 4050, 4055, 4060, 4080, 4300, 4330, 4340, 4400, 4401, 4402, 4403, 4406, 4800, 5010, 5044, 5054, 5055, 5063, 5064, 5065, 5066, 5070, and 5244 commercially available from Ciba Specialty Chemicals Corp.; Solsperse series 3000, 11200, 13240, 13650, 13940, 16000, 17000, 18000, 20000, 21000, 24000SC, 24000GR, 26000, 28000, 31845, 32000, 32500, 32550, 32600, 33000, 34750, 35100, 35200, 36000, 36600, 37500, 38500, 39000, 53095, 54000, 55000, 56000, and 71000 commercially available from Lubrizol Corp.; DISPARLON series 1210, 1220, 1831, 1850, 1860, 2100, 2150, 2200, 7004, KS-260, KS-273N, KS-860, KS-873N, PW-36, DN-900, DA-234, DA-325, DA-375, DA-550, DA-1200, DA-1401, and DA-7301 commercially available from Kusumoto Chemicals, Ltd.; Ajisper series PB-711, PB-821, PB-822, PN-411, and PA-111 commercially available from Ajinomoto Fine-Techno Co., Inc.; Surfynol series 104A, 104C, 104E, 104H, 104S, 104BC, 104DPM, 104PA, 104PG-50, 420, 440, DF110D, DF110L, DF37, DF58, DF75, DF210, CT111, CT121, CT131, CT136, GA, TG, and TGE commercially available from Air Products and Chemicals, Inc.; Orfin series STG and E1004 commercially available from Nissin Chemical Industry Co., Ltd.; SN-Sperse series 70, 2120, and 2190 available from San Nopco, Ltd.; Adeka Col and Adeka Tol series commercially available from ADEKA Corp.; Sannonic series, Naroacty CL series, Emulmin series, Newpol PE series, Ionet M series, Ionet D series, Ionet S series, Ionet T series, and Sansepara 100 commercially available from Sanyo Chemical Industries, Ltd.

In regard to a preferable amount of the dispersant to be added in the ink composition, when the mass of the pigment in the ink composition is designated as P, and the amount of the polymeric dispersant in the ink composition is designated as D, the mass ratio (D/P) is preferably such that 0.01 ≤ D/P ≤ 2.0, more preferably 0.03 ≤ D/P ≤ 1.5, and even more preferably 0.05≤ D/P ≤ 0.6. When the mass ratio is in the range described above, aggregation/precipitation of the pigment and an increase in the ink viscosity do not occur, and the ink composition having excellent storage stability is obtained. Also, the ink composition having excellent discharge stability even when the ink viscosity is low is obtained.

Furthermore, at the time of dispersion, in addition to the dispersant, dispersion aids that are generally called synergists (for example, Solsperse series 5000, 12000 and 22000 commercially available from Lubrizol Corp.; and EFKA 6745 commercially available from Ciba Specialty Chemicals Corp.), various surfactants and defoamants can be added. Thereby, a more preferable ink composition having enhanced pigment dispersibility and wettability is obtained.

The ink composition of the present invention may also include, if necessary, other components such as a co-sensitizer, an ultraviolet absorbent, an antioxidant, a discoloration preventing agent, a conductive salt, a solvent, a polymer compound, a basic compound, a leveling additive, a mattifying agent, and a polyester resin, a polyurethane resin, a vinyl resin, an acrylic resin, a rubber resin and a wax for adjusting the film properties, in addition to the various components described above.

As the other components, known compounds can be used, and for example, those described in JP2009-221416A may be used.

### <Properties of ink composition>

The ink composition of the present invention is preferably such that, in view of dischargeability, the viscosity at 25°C is 40 mPa·s or less, more preferably 5 mPa·s to 40 mPa·s, and even more preferably 7 mPa·s to 30 mPa·s. Furthermore, the viscosity at the discharge temperature (preferably at 25°C to 80°C, and more preferably at 25°C to 50°C) is preferably 3 mPa·s to 15 mPa·s, and more preferably 3 mPa·s to 13 mPa·s. It is preferable for the ink composition of the present invention that the composition ratio be appropriately adjusted so that the viscosity falls in the range described above. When the viscosity at room temperature (25°C) is set high, even in the case of using a porous recording medium, infiltration of the ink composition into the recording medium can be avoided, and the amount of uncured monomer can be reduced, which is preferable. Furthermore, bleeding of ink at the time of impact of the ink composition can be suppressed, and as a result, the image quality is improved, which is also preferable.

In regard to the ink composition of the present invention, the surface tension at 25°C is preferably 20 mN/m to 40 mN/m, and more preferably 23 mN/m to 39 mN/m. When recording is performed on various recording media such as polyolefin, polyethylene terephthalate (PET), coated paper, and non-coated paper, from the viewpoints of bleeding and infiltration, the surface tension is preferably 20 mN/m or greater, and from the viewpoint of having excellent wettability, the surface tension is preferably 40 mN/m or less.

### (Inkjet recording system, inkjet recording apparatus and print material)

The inkjet recording system of the present invention is a system in which the ink composition of the present invention is discharged on a recording medium (a support, a recording material or the like) for inkjet recording, the ink composition discharged on the recording medium is irradiated with an active radiation to cure the ink, and thus an image is formed.

More specifically, the inkjet recording system of the present invention includes (a) an image forming step of discharging the inkjet ink composition of the present invention by an inkjet recording system, and forming an image on a recording medium; and (b) a curing step of irradiating the image thus obtained with an active radiation, and curing the ink composition.

When the inkjet recording system of the present invention includes the steps (a) and (b) as described above, an image is formed by the ink composition cured on the recording medium.

The present invention also includes print materials that are recorded by the inkjet recording system of the present invention.

In the step (a) according to the inkjet recording system of the present invention, an inkjet recording apparatus described in detail below can be used.

### <Inkjet recording apparatus>

The inkjet recording apparatus that can be used in the inkjet recording system of the present invention is not particularly limited, and any known inkjet recording apparatus that can achieve the intended resolution can be arbitrarily selected and used. That is, any known inkjet recording apparatus including commercially available products can carry out the discharge of the ink onto a recording medium in the step (a) of the inkjet recording system of the present invention.

The inkjet recording apparatus that can be used in the present invention is an apparatus including, for example, an ink supply system, a temperature sensor, and an active radiation source.

The ink supply system is composed of, for example, a source tank containing the ink composition of the present invention, a supply piping, an ink supply tank immediately before an inkjet head, a filter, and a piezo type inkjet head. The piezo type inkjet head can be driven so as to discharge multi-sized dots of preferably 1 pl to 100 pl, and more preferably 8 pl to 30 pl, at a resolution of preferably 320×320 dpi to 4,000×4,000 dpi, more preferably 400×400 dpi to 1,600×1,600 dpi, and even more preferably 720×720 dpi. Meanwhile, the term dpi as used in the present invention indicates the number of dots per 2.54 cm.

As discussed above, since it is preferable for the ink composition of the present invention to maintain the discharged ink composition at a constant temperature, it is preferable that the inkjet recording apparatus include a unit for stabilizing the temperature of the ink composition. The area to be maintained at a constant temperature includes from the ink tank (intermediate tank if there is an intermediate tank) to all of the piping system and members to the nozzle injection surface. That is, the region from the ink supply tank to the inkjet head area can be subjected to insulation and heating.

The method for controlling temperature is not particularly limited, but for example, it is preferable to install plural temperature sensors at various piping areas and to control by heating in accordance with the flow rate of the ink and the environment temperature. The temperature sensors can be installed near the ink supply tank and the nozzles of the inkjet head. The inkjet recording apparatus or the inkjet head part is preferably thermally shielded or insulated, so that the inkjet head part that is heated is not affected by the temperature of the outside air. In order to shorten the printer start-up booting time required for heating, or in order to reduce the loss of heat energy, it is preferable to carry out insulation from other parts, and simultaneously to decrease the thermal capacity of the entire heating unit.

The discharge of the ink composition of the present invention using the inkjet recording apparatus described above, is preferably carried out after heating the ink composition preferably to 25°C to 80°C, and more preferably to 25°C to 50°C, and thereby adjusting the viscosity of the ink composition to preferably 3 mPa·s to 15 mPa·s, and more preferably 3 mPa·s to 13 mPa·s. Particularly, when an ink composition having an ink viscosity at 25°C of 50 mPa·s or less is used as the ink composition of the present invention, it is preferable because the ink composition can be satisfactorily discharged. When this method is used, high discharge stability can be realized.

Since radiation-curable ink compositions such as the ink composition of the present invention generally have higher viscosity than those aqueous ink compositions that are conventionally used as ink for inkjet recording, the fluctuation in viscosity due to a fluctuation in temperature at the time of discharge is large. The viscosity fluctuation greatly affects the changes in the liquid droplet size and the changes in the liquid droplet discharge rate, and also causes deterioration of image quality. Therefore, it is necessary to maintain the temperature of the ink at the time of discharge to be as constant as far as possible. Therefore, according to the present invention, the range of control of the ink temperature is appropriately set to preferably (set temperature ± 5°C), more preferably to (set temperature ± 2°C), and even more preferably to (set temperature ± 1°C).

Next, the (b) step of irradiating the discharged ink composition, that is, an image thus obtained, with an active radiation, and curing the ink composition will be described.

The ink composition discharged on the recording medium is cured by being irradiated with an active radiation. This is because the polymerization initiator included in the ink composition of the present invention is degraded by the irradiation of an active radiation, and generates a polymerization initiating species such as a radical, and the polymerization reaction of the polymerizable compound is commenced and accelerated by the initiating species. At this time, if a sensitizer is present together with the polymerization initiator in the ink composition, the sensitizer in the system absorbs the active radiation and enters an excited state, and the degradation of the polymerization initiator is accelerated by the contact of the sensitizer with the polymerization initiator. Thereby, a curing reaction can be achieved with higher sensitivity.

Here, as the active radiation, α-radiation, γ-radiation, an electron beam, X-rays, ultraviolet radiation, visible radiation, infrared radiation or the like can be used. The peak wavelength of the active radiation depends on the absorption characteristics of the sensitizer, but for example, the peak wavelength is preferably 200 to 600 nm, more preferably 300 nm to 450 nm, and even more preferably 320 nm to 420 nm. It is particularly preferable to use ultraviolet radiation having a peak wavelength in the range of 340 nm to 400 nm as the active radiation.

Furthermore, the polymerization initiator of the ink composition of the present invention is a polymerization initiator having sufficient sensitivity even for a low output active radiation. Therefore, it is appropriate to cure the ink composition such that the illuminance of the exposed surface is 10 mW/cm² to 4,000 mW/cm², and more preferably 20 mW/cm² to 2,500 mW/cm².

As an active radiation source, a mercury lamp, a gas/solid laser, and the like are generally used, and as a light source used in the curing of an ultraviolet light-curable ink composition for inkjet recording, a mercury lamp and a metal halide lamp are widely known. However, currently, there is a strong demand for a mercury-free environment from the viewpoint of environmental protection. Therefore, replacement with a GaN-based semiconductor ultraviolet light emitting device is very useful from industrial and environmental viewpoints. Furthermore, a light emitting diode (LED) (UV-LED) and a laser diode (LD) (UV-LD) are small-sized inexpensive devices having long service life and high efficiency, and are expected as light sources for light-curable inkjet.

Furthermore, it is possible to use a light emitting diode (LED) and a laser diode (LD) as the active radiation source. Particularly, in the case where an ultraviolet radiation source is required, an ultraviolet LED and an ultraviolet LD can be used. For example, Nichia Corp. has marketed an ultraviolet LED whose main emission spectrum has a wavelength range between 365 nm and 420 nm. When a much shorter wavelength is needed, US6084250B discloses an LED capable of emitting an active radiation whose main emission spectrum has a wavelength range between 300 nm and 370 nm. Furthermore, other ultraviolet LEDs are also available, and different ultraviolet bands can also be irradiated. An active radiation source that is particularly preferable is a UV-LED, and particularly preferably a UV-LED having a peak wavelength of 340 nm to 400 nm.

The peak illuminance of the LED on a recording medium is preferably 10 mW/cm² to 2,000 mW/cm², more preferably 20 mW/cm² to 1,000 mW/cm², and particularly preferably 50 mW/cm² to 800 mW/cm².

The ink composition of the present invention is appropriately irradiated with such an active radiation preferably for 0.01 seconds to 120 seconds, and more preferably for 0.1 seconds to 90 seconds.

The irradiation conditions for the active radiation and the basic irradiation method are disclosed in JP1985-132767A (JP-S60-132767A). Specifically, irradiation is carried out by providing light sources on both sides of a head unit including the discharge apparatus of the ink composition, and scanning the head unit and the light source in a so-called shuttle mode. The irradiation of the active radiation is carried out in a certain time (preferably 0.01 seconds to 0.5 seconds, more preferably 0.01 seconds to 0.3 seconds, and even more preferably 0.01 seconds to 0.15 seconds) after the impact of the ink composition. As such, when the time from impact to irradiation of the ink composition is controlled to be a very short time, blurring of the ink composition that has been impacted on the recording medium can be prevented before curing. Furthermore, since a porous recording medium can be exposed before the ink composition infiltrates to a deep part where the light source does not reach, retention of unreacted monomers can be suppressed, which is preferable.

Furthermore, even a method of curing a separate light source which does not require driving can be applied to the inkjet recording system of the present invention.

When an inkjet recording system such as described above is employed, even on various recording media having different surface wettabilities, a constant dot diameter of the impacted ink composition can be maintained, and therefore, satisfactory image quality can be obtained. Meanwhile, in order to obtain colored images, it is preferable to superimpose in order from colors with lower brightness. When ink compositions are superimposed in order from ink compositions having lower brightness, the irradiated radiation can easily reach the lower part of the ink compositions superimposed, and satisfactory curing sensitivity, reduction of residual monomers, and enhancement of adhesiveness can be expected. Furthermore, the irradiation of an active radiation can be carried out by discharging all colors and collectively exposing the ink compositions, but it is preferable to expose each color from the viewpoint of accelerating curing.

In this manner, when the ink composition of the present invention is cured with high sensitivity by irradiation with an active radiation, images can be formed on the surface of a recording medium.

The ink composition of the present invention is preferably used as an ink set including plural inks for inkjet recording.

In the inkjet recording system of the present invention, the order of the coloring ink compositions that are discharged is not particularly limited, but it is preferable to apply coloring ink compositions having lower brightness onto the recording medium, and in the case of using yellow, cyan, magenta and black, it is preferable to apply the ink compositions in the order of yellow, cyan, magenta and black onto the recording medium. Furthermore, when white is used in addition to these, it is preferable to apply ink compositions in the order of white, yellow, cyan, magenta and black onto the recording medium. Furthermore, the present invention is not limited to this, and an ink set of the present invention which includes at least seven colors in total of yellow, light cyan, light magenta, cyan, magenta, grey, black and white ink compositions can also be preferably used. In this case, it is preferable to apply ink compositions in the order of white, light cyan, light magenta, yellow, cyan, magenta and black onto the recording medium.

According to the present invention, the recording medium is not particularly limited, and any recording medium known as a support or a recording material can be used. Examples include paper, paper laminated with plastics (polyethylene, polypropylene, polystyrene, and the like), metal plates (plates of aluminum, zinc, copper and the like), plastic films (films of cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal and the like), and paper or plastic films on which the metals described above are laminated or deposited. Furthermore, as a recording medium according to the present invention, a non-absorptive recording medium can be suitably used.

### EXAMPLES

Hereinafter, the present invention will be described more specifically through Examples and Comparative Examples. However, the present invention is not limited to these Examples.

Unless stated otherwise, the unit "part" in the following descriptions means "parts by mass".

The components of the ink compositions used in Examples and Comparative Examples are as indicated below.
- NOVOPERM YELLOW 4G01 (yellow pigment, C.I. Pigment Yellow 155, available from Clariant Japan K.K.)
- NOVOPERM YELLOW H2G (yellow pigment, C.I. Pigment Yellow 120, available from Clariant Japan K.K.)
- CROMOPHTAL YELLOW LA (yellow pigment, C.I. Pigment Yellow 150, available from BASF Japan, Ltd.)
- NOVOPERM YELLOW PHG (yellow pigment C.I. Pigment Yellow 180, available from Clariant Japan K.K.)
- CINQUASIA MAGENTA RT-335 D (magenta pigment, mixed crystals of C.I. Pigment Yellow 19 and C.I. Pigment Red 202, available from BASF Japan, Ltd.)
- INKJET MAGENTA E02 (magenta pigment, C.I. Pigment Red 122, available from Clariant Japan K.K.)
- INKJET MAGENTA E5B02 (magenta pigment, C.I. Pigment Violet 19, available from Clariant Japan K.K.)
- IRGALITTE BLUE GLVO (cyan pigment, C.I. Pigment Blue 15:4, available from BASF Japan, Ltd.)
- IRGALITTE BLUE GLO (cyan pigment, C.I. Pigment Blue 15:3, available from BASF Japan, Ltd.)
- SPECIAL BLACK 250 (black pigment, C.I. Pigment Black 7, available from Ebonik Degussa Japan Co., Ltd.)
- KRONOS 2300 (white pigment, C.I. Pigment White 6, available from Kronos, Inc.)
- SOLSPERSE 22000 (pigment dispersant, available from Lubrizol Japan, Ltd.)
- SOLSPERSE 32000 (pigment dispersant, available from Lubrizol Japan, Ltd.)
- SOLSPERSE 41000 (pigment dispersant, available from Lubrizol Japan, Ltd.)
- DISPERBYK-168 (pigment dispersant, solids content 30%, available from BYK Chemie GmbH)
- TEGO DISPERS 685 (pigment dispersant, available from Ebonik Degussa Japan Co., Ltd.)
- SR506D (isobornyl acrylate, available from Sartomer Japan, Inc.)
- SR531 (cyclic trimethylolpropane formal acrylate, CTFA, available from Sartomer Japan, Inc.)
- NVC (N-vinylcaprolactam, available from BASF Japan, Ltd.)
- SR285 (tetrahydrofurfuryl acrylate, available from Sartomer Japan, Inc.)
- FA-512AS (dicyclopentenyloxyethyl acrylate, available from Hitachi Chemical Co., Ltd.)
- SR339A (2-phenoxyethyl acrylate, available from Sartomer Japan, Inc.)
- SR9003 (propoxylated (2) neopentyl glycol diacrylate (compound produced by diacrylating a neopentyl glycol propylene oxide 2-mol adduct), available from Sartomer Japan, Inc.)
- SR341 (3-methyl-1,5-pentanediol diacrylate, available from Sartomer Japan, Inc.)
- SR454 (ethoxylated (3) trimethylolpropane triacrylate, available from Sartomer Japan, Inc.)
- CN964A85 (urethane acrylate oligomer, average number of functional groups: 2, available from Sartomer Japan, Inc.)
- Lucirin TPO (photopolymerization initiator, 2,4,6-trimethylbenzoyldiphenylphosphine oxide, available from BASF Japan, Ltd.)
- Lucirin TPO-L (photopolymerization initiator, (2,4,6-trimethylbenzoyl)-ethoxyphenylphosphine oxide, available from BASF Japan, Ltd.)
- IRGACURE 819 (photopolymerization initiator, bis(2,4,6-trimethylbenzoyl)phenylphosphine oxide, available from BASF Japan, Ltd.)
- IRGACURE 184 (photopolymerization initiator, 1-hydroxycyclohexyl phenyl ketone, available from BASF Japan, Ltd.)
- IRGACURE 369 (photopolymerization initiator, 2-benzyl-2-dimethylamino-1-(4-morpholinophenyl)butanone-1, available from BASF Japan, Ltd.)
- SPEEDCURE ITX (photopolymerization initiator, isopropylthioxanthone, available from Lambson, Ltd.)
- SPEEDCURE DETX (photopolymerization initiator, diethylthioxanthone, available from Lambson, Ltd.)
- FIRSTCURE ST-1 (polymerization inhibitor, available from ChemFirst, Inc.)
- CMTCO (photopolymerization initiator having the following structure, 6-chloro-2-methylthiochroman-4-one)

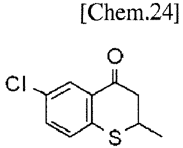

### (Preparation of mill base)

Each of mill bases of cyan, yellow, magenta, black and white were mixed at the compositions indicated in Table 1, and the mixture was stirred for 10 minutes at 2,500 rotations/min using a mixer (L4R available from Silverson Machines, Ltd.). Thereafter, the mixture was introduced into a bead mill dispersing machine, DISPERMAT LS (available from VMA-GETZMANN GmbH), and dispersion was carried out for 6 hours at 2,500 rotations/min using a YTZ ball (available from Nikkato Corp.) having a diameter of 0.65 mm.

**[Table 1]**

| Unit: parts by mass | Mill base | | | | | | | | | | |
|---|---|---|---|---|---|---|---|---|---|---|---|
| | Yellow | | | | Magenta | | | Cyan | | Black | White |
| | YM1 | YM2 | YM3 | YM4 | MM1 | MM2 | MM3 | CM1 | CM2 | KM1 | WM1 |
| NOVOERPERM YELLOW 4G 01 | 29.7 | | | | | | | | | | |
| NOVOPERM YELLOW H2G | | 29.7 | | | | | | | | | |
| CROMOPHTAL YELLOW LA | | | 29.7 | | | | | | | | |
| NOVOPERM YELLOW PHG | | | | 30 | | | | | | | |
| CINQUASIA MAGENTA RT-33 5D | | | | | 30 | | | | | | |
| INKJET MAGENTA E02 | | | | | | 30 | | | | | |
| INKJET MAGENTA E5B02 | | | | | | | 30 | | | | |
| IRGALITTE BLUE GLVO | | | | | | | | 30 | | | |
| IRGALITTE BLUE GLO | | | | | | | | | 30 | | |
| SPECIAL BLACK 250 | | | | | | | | | | 40 | |
| KRONOS 2300 | | | | | | | | | | | 50 |
| SOLSPERSE 22000 | 1.6 | | | 3.5 | | | | | | | |
| SOLSPERSE 32000 | | 15.9 | 15.9 | | 10.4 | | | 10 | 10 | 10 | |
| SOLSPERSE 41000 | | | | | | | | | | | 3.5 |
| DISPERBYK-168 | 28 | | | 30 | | | | | | | |
| TEGO DISPERS 685 | | | | | | 20 | 20 | | | | |
| SR9003 | | 53.4 | 53.4 | 35.5 | 58.6 | | | 59 | 59 | 49 | 45.5 |
| SR339A | 39.7 | | | | | 49 | 49 | | | | |
| FIRSTCURE ST-1 | 1 | 1 | 1 | 1 | 1 | 1 | 1 | 1 | 1 | 1 | 1 |

### (Example 1)

### <Preparation of ink composition>

The following components were stirred for 15 minutes at 2,500 rotations/min using a mixer (L4R available from Silverson Machines, Ltd.). Thereafter, the mixture was filtered using a cartridge filter available from Nippon Pall, Ltd. (product name: Profile II AB01A01014J), and thus a cyan ink C1 was obtained.

The viscosity at 25°C measured using a TVE-22LT available from Toki Sangyo Co., Ltd. was 18.1 mPa·s, and the surface tension at 25°C measured using an automatic surface tensiometer CBVP-Z available from Kyowa Interface Science Co., Ltd. was 30.4 mN/m.

| Cyan ink C1 | |
|---|---|
| Cyan mill base CM1 | 8.6 parts by mass |
| SR506D | 28.6 parts by mass |
| NVC | 16.8 parts by mass |
| SR531 | 20.7 parts by mass |
| SR341 | 3.8 parts by mass |
| IRGACURE 184 | 3.0 parts by mass |
| IRGACURE 819 | 3.2 parts by mass |
| Lucirin TPO-L | 9.5 parts by mass |
| SPEEDCURE ITX | 0.8 parts by mass |
| FIRSTCURE ST-1 | 0.4 parts by mass |
| CN964A85 | 4.6 parts by mass |

The cyan ink C1 thus prepared was charged into a UV inkjet printer LuxelJet UV350GTW available from Fujifilm Holdings Corp., and A1-sized test images including tone images having a density of from 0% to 100% (5% increment) were printed on a coated paper (product name: OK TOPKOTE Plus) available from Oji Paper Co., Ltd. under the conditions of fine art mode and lamp 5. Thus, evaluations of curability, banding, gloss and inkjet dischargeability were carried out according to the following criteria. Furthermore, the recording medium was changed to a polyvinyl chloride sheet available from Morino Kakou Co., Ltd. (product name: Emlon Calender Sheet (white), thickness 220 µm), test images were printed, and an evaluation of adhesiveness was carried out based on the following criteria. The results are shown in Table 2.

### <Evaluation>

### [Evaluation of curability]

Curability was evaluated by evaluating the stickiness of the print material surface based on the feeling of touch at an area of 100% density, and the presence or absence of transfer of an image area when print materials were overlapped and left to stand for one day, based on the following criteria.
A: There was no stickiness on the print material surface, and there was no transfer.
B: The print material surface was slightly sticky, but there was no transfer.
C: The print material surface was sticky, and there was slight transfer.
D: The print material surface was very sticky, and there was a serious transfer.

### [Evaluation of banding]

Ten people observed the presence or absence of banding in the print material from a distance of 50 cm.
A: Everybody replied that banding was not recognized.
B: The number of people who replied that banding was recognized was 1 to 3 people out of 10 people.
C: The number of people who replied that banding was recognized was 4 to 6 people out of 10 people.
D: The number of people who replied that banding was recognized was 7 or more people out of 10 people.

### [Evaluation of gloss]

The degree of glossiness at an area of 100% density was measured at 60° gloss using a gloss meter available from Horiba, Ltd. (product name: IG-331). As the value is higher, highly glossy and vivid print materials are obtained. If the gloss value is less than 20, low-contrast, so-called dull images are likely to be obtained, and vividness is impaired.

### [Evaluation of inkjet dischargeability]

Twenty sheets of test images were printed continuously, and then nozzle-check images were printed to determine the number of non-discharging nozzles. As the number of non-discharging nozzles is smaller, inkjet dischargeability is good. If the number of non-discharging nozzles is 3 or greater, streaks caused by missing nozzles stand out prominently, and the value of print material is significantly impaired.

### [Adhesiveness to recording medium]

An evaluation was carried out by a cross-cutting method according to ISO2409: 2007 (JIS K5600-5-6).
0: The edges of cuts were completely smooth, and there was no peeling of lattices.
1: Small peeling of coating films could be seen at the intersections of cuts. No more than 5% was affected at the cross-cut areas.
2: More than 5%, but no more than 15%, was affected along the edges of cuts of the coating film, and/or at the cross-cut areas at the intersections.
3: Severe peeling of the coating film occurred partially or entirely along the edges of cuts, and/or various parts of the lattices were partially or entirely peeled off. More than 15%, but no more than 35%, was affected at the cross-cut areas.
4: Severe peeling of the coating film occurred partially or entirely along the edges of cuts, and/or several places of the lattices were partially or entirely peeled off. More than 35%, but no more than 65%, was affected at the cross-cut areas.
5: The degree of peeling exceeded 4.

### (Examples 2 to 5, Comparative Examples 1 to 6)

Cyan inks C2 to C5 and CC1 to CC6 as indicated in Table 2 were prepared in the same manner as in Example 1, and an evaluation was carried out. The results are shown in Table 2.

**[Table 2]**

| Unit: parts by mass | Example | | | | | Comparative Example | | | | | |
|---|---|---|---|---|---|---|---|---|---|---|---|
| | 1 | 2 | 3 | 4 | 5 | 1 | 2 | 3 | 4 | 5 | 6 |
| Cyan ink | C1 | C2 | C3 | C4 | C5 | CC1 | CC2 | CC3 | CC4 | CC5 | CC6 |
| Cyan mill base CM1 | 8.6 | 8.6 | 8.6 | 8.6 | 8.6 | 8.6 | 8.6 | 8.6 | 8.6 | 8.6 | 8.6 |
| SR506D | 28.6 | 28.6 | 28.6 | 28.6 | 28.6 | 28.6 | 28.6 | 28.6 | 28.6 | 28.6 | 28.6 |
| NVC | 16.8 | 16.8 | 16.8 | 16.8 | 16.8 | 16.8 | 16.8 | 16.8 | 16.8 | 16.8 | 16.8 |
| SR531 | 22.5 | 22.5 | 22.5 | 23.3 | 22.5 | 30 | 25.9 | 22.5 | 22.5 | 26.6 | 22.5 |
| SR341 | 3.8 | 3.8 | 3.8 | 3.8 | 3.8 | 3.8 | 3.8 | 3.8 | 3.8 | 3.8 | 3.8 |
| IRGACURE 184 | 3 | 3 | 3 | 3 | 3 | 3 | 3 | 3 | 3 | 3 | 3 |
| IRGACURE 819 | 3.4 | 3.4 | 3.4 | 3.4 | 3.4 | 3.4 | | 3.4 | | 3.4 | |
| Lucirin TPO-L | 7.5 | 4.1 | 4.1 | 7.5 | 7.5 | | 7.5 | | 7.5 | | 7.5 |
| Lucirin TPO | | | 3.4 | | | | | 7.5 | 3.4 | | |
| SPEEDCURE ITX | 0.8 | 0.8 | 0.8 | | | 0.8 | 0.8 | 0.8 | 0.8 | 0.8 | 0.8 |
| SPEEDCURE DETX | | | | | 0.8 | | | | | | |
| IRGACURE 369 | | 3.4 | | | | | | | | 3.4 | 3.4 |
| FIRSTCURE ST-1 | 0.4 | 0.4 | 0.4 | 0.4 | 0.4 | 0.4 | 0.4 | 0.4 | 0.4 | 0.4 | 0.4 |
| CN964A85 | 4.6 | 4.6 | 4.6 | 4.6 | 4.6 | 4.6 | 4.6 | 4.6 | 4.6 | 4.6 | 4.6 |
| Monomer ratio (%)* | 83.4 | 83.4 | 83.4 | 83.6 | 83.4 | 84.8 | 84.1 | 83.4 | 83.4 | 84.2 | 83.4 |
| Curability | A | A | A | B | A | C | D | A | C | B | C |
| Banding | A | A | A | B | A | D | D | A | D | C | C |
| Gloss | 31 | 21 | 25 | 27 | 32 | 27 | 28 | 16 | 27 | 13 | 14 |
| Inkjet dischargeability | 0 | 1 | 1 | 0 | 0 | 0 | 0 | 2 | 1 | 1 | 1 |
| Adhesiveness | 1 | 1 | 1 | 1 | 1 | 4 | 3 | 1 | 3 | 3 | 2 |
| * Proportions of compounds represented by formula (C-1) to formula (C-4) in the total amount of the (C) radical polymerizable compound | | | | | | | | | | | |

### (Comparative Examples 7 to 10)

Cyan inks CC7 to CC10 as indicated in Table 3 were prepared in the same manner as in Example 1, and an evaluation was carried out. The results are shown in Table 3.

**[Table 3]**

| Unit: parts by mass | Comparative Example | | | |
|---|---|---|---|---|
| | 7 | 8 | 9 | 10 |
| Cyan ink | CC7 | CC8 | CC9 | CC10 |
| Cyan mill base CM1 | 8.6 | 8.6 | 8.6 | 8.6 |
| SR506D | 28.6 | 28.6 | 28.6 | 28.6 |
| NVC | 16.8 | 16.8 | 16.8 | 16.8 |
| SR531 | 18.5 | 25.5 | 15.5 | 29.5 |
| SR341 | 3.8 | 3.8 | 3.8 | 3.8 |
| IRGACURE 184 | 3.0 | 3.0 | 3.0 | 3.0 |
| IRGACURE 819 | 7.4 | 0.4 | 3.4 | 3.4 |
| Lucirin TPO-L | 7.5 | 7.5 | 14.5 | 0.5 |
| SPEEDCURE ITX | 0.8 | 0.8 | 0.8 | 0.8 |
| FIRSTCURE ST-1 | 0.4 | 0.4 | 0.4 | 0.4 |
| CN964A85 | 4.6 | 4.6 | 4.6 | 4.6 |
| Curability | C | C | D | C |
| Banding | A | D | A | D |
| Gloss | 20 | 27 | 34 | 29 |
| Inkjet dischargeability | 4 | 0 | 0 | 0 |
| Adhesiveness | 0 | 4 | 0 | 3 |

### (Examples 6 to 20)

Cyan inks C6 to C20 as indicated in Table 4 were prepared in the same manner as in Example 1, and an evaluation was carried out. The results are shown in Table 4.

**[Table 4]**

| Unit: parts by mass | Example | | | | | | | | | | | | | | |
|---|---|---|---|---|---|---|---|---|---|---|---|---|---|---|---|
| | 6 | 7 | 8 | 9 | 10 | 11 | 12 | 13 | 14 | 15 | 16 | 17 | 18 | 19 | 20 |
| Cyan ink | C6 | C7 | C8 | C9 | C10 | C11 | C12 | C13 | C14 | C15 | C16 | C17 | C18 | C19 | C20 |
| Cyan mill base CM1 | 8.6 | 8.6 | 8.6 | 8.6 | 8.6 | 8.6 | 8.6 | 8.6 | 8.6 | 8.6 | 8.6 | 8.6 | 8.6 | 8.6 | 8.6 |
| SR506D | 28.6 | 28.6 | 28.6 | 28.6 | 28.6 | 28.6 | 28.6 | 28.6 | 28.6 | 28.6 | 28.6 | 28.6 | 28.6 | 28.6 | 28.6 |
| NVC | 16.8 | 16.8 | 16.8 | 16.8 | 16.8 | 16.8 | 16.8 | 16.8 | 16.8 | 16.8 | 16.8 | 16.8 | 16.8 | 16.8 | 16.8 |
| SR531 | 19.5 | 20.5 | 21.5 | 23.5 | 24.5 | 16.5 | 18.5 | 20.5 | 24.5 | 26.5 | 28.5 | 13.5 | 25.5 | 18.5 | 30.5 |
| SR341 | 3.8 | 3.8 | 3.8 | 3.8 | 3.8 | 3.8 | 3.8 | 3.8 | 3.8 | 3.8 | 3.8 | 3.8 | 3.8 | 3.8 | 3.8 |
| IRGACURE 184 | 3 | 3 | 3 | 3 | 3 | 3 | 3 | 3 | 3 | 3 | 3 | 3 | 3 | 3 | 3 |
| IRGACURE 819 | 6.4 | 5.4 | 4.4 | 2.4 | 1.4 | 3.4 | 3.4 | 3.4 | 3.4 | 3.4 | 3.4 | 6.4 | 6.4 | 1.4 | 1.4 |
| Lucirin TPO-L | 7.5 | 7.5 | 7.5 | 7.5 | 7.5 | 13.5 | 11.5 | 9.5 | 5.5 | 3.5 | 1.5 | 13.5 | 1.5 | 13.5 | 1.5 |
| SPEEDCURE ITX | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| FIRSTCURE ST-1 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| CN964A85 | 4.6 | 4.6 | 4.6 | 4.6 | 4.6 | 4.6 | 4.6 | 4.6 | 4.6 | 4.6 | 4.6 | 4.6 | 4.6 | 4.6 | 4.6 |
| Monomer ratio (%)* | 82.8 | 83.0 | 83.2 | 83.6 | 83.8 | 82.1 | 82.6 | 83.0 | 83.8 | 84.2 | 84.6 | 81.4 | 84.0 | 82.6 | 84.9 |
| Curability | B | A | A | A | B | B | B | A | A | A | A | C | B | C | B |
| Banding | A | A | A | A | B | A | A | A | A | A | B | A | A | A | B |
| Gloss | 24 | 26 | 31 | 31 | 32 | 34 | 32 | 32 | 30 | 29 | 27 | 28 | 23 | 35 | 25 |
| Inkjet dischargeability | 2 | 1 | 0 | 0 | 0 | 0 | 0 | 0 | 0 | 0 | 0 | 1 | 2 | 0 | 0 |
| Adhesiveness | 0 | 0 | 1 | 2 | 2 | 0 | 1 | 1 | 1 | 1 | 2 | 0 | 1 | 1 | 2 |
| * Proportions of compounds represented by formula (C-1) to formula (C-4) in the total amount of the (C) radical polymerizable compound | | | | | | | | | | | | | | | |

### (Comparative Examples 21 to 23 and 26, and Examples 24, 25, and 27 to 35 and Reference Example 36)

Cyan inks C21 to C36 having the compositions indicated in Table 5 were prepared in the same manner as in Example 1, and an evaluation was carried out. The results are shown in Table 5. In Table 5, Examples 21 to 23, and 26 are Comparative Examples.

**[Table 5]**

| Unit: parts by mass | Example | | | | | | | | | | | | | | | |
|---|---|---|---|---|---|---|---|---|---|---|---|---|---|---|---|---|
| | 21 | 22 | 23 | 24 | 25 | 26 | 27 | 28 | 29 | 30 | 31 | 32 | 33 | 34 | 35 | 36 |
| Cyan ink | C21 | C22 | C23 | C24 | C25 | C26 | C27 | C28 | C29 | C30 | C31 | C32 | C33 | C34 | C35 | C36 |
| Cyan mill base CM1 | 8.6 | 8.6 | 8.6 | 8.6 | 8.6 | 8.6 | 8.6 | 8.6 | 8.6 | 8.6 | 8.6 | 8.6 | 8.6 | 8.6 | 8.6 | 8.6 |
| SR506D | | 22.5 | | | | 22.5 | 22.5 | 22.5 | | | | 28.6 | 28.6 | | 16 | |
| NVC | | | 22.5 | | | 22.5 | | | 22.5 | 22.5 | | 16.8 | | 16.8 | 16 | 16.8 |
| SR531 | | | | 22.5 | | | 22.5 | | 22.5 | | 22.5 | | 22.5 | 28.6 | 19.9 | 37 |
| SR285 | | | | | 22.5 | | | 22.5 | | 22.5 | 22.5 | 22.5 | 16.8 | 22.5 | 16 | 22.5 |
| SR339A | 37.9 | 26.7 | 26.7 | 26.7 | 26.7 | 22.9 | 22.9 | 22.9 | 22.9 | 22.9 | 22.9 | | | | | |
| FA-512AS | 30 | 18.7 | 18.7 | 18.7 | 18.7 | | | | | | | | | | | |
| SR341 | 2 | 3.8 | 3.8 | 3.8 | 3.8 | 3.8 | 3.8 | 3.8 | 3.8 | 3.8 | 3.8 | 3.8 | 3.8 | 3.8 | 3.8 | |
| SR454 | 1.8 | | | | | | | | | | | | | | | |
| IRGACURE 184 | 3 | 3 | 3 | 3 | 3 | 3 | 3 | 3 | 3 | 3 | 3 | 3 | 3 | 3 | 3 | 3 |
| IRGACURE 819 | 3.4 | 3.4 | 3.4 | 3.4 | 3.4 | 3.4 | 3.4 | 3.4 | 3.4 | 3.4 | 3.4 | 3.4 | 3.4 | 3.4 | 3.4 | 3.4 |
| Lucirin TPO-L | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 |
| SPEEDCURE ITX | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| FIRSTCURE ST-1 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| CN964A85 | 4.6 | 4.6 | 4.6 | 4.6 | 4.6 | 4.6 | 4.6 | 4.6 | 4.6 | 4.6 | 4.6 | 4.6 | 4.6 | 4.6 | 4.6 | |
| Monomer ratio (%)* | 0 | 27.7 | 27.7 | 27.7 | 27.7 | 55.3 | 55.3 | 55.3 | 55.3 | 55.3 | 55.3 | 83.4 | 83.4 | 83.4 | 83.4 | 93.8 |
| Curability | B | B | B | B | B | B | B | B | A | A | B | B | A | A | A | A |
| Banding | A | B | A | A | A | B | B | A | A | B | A | A | A | A | A | A |
| Gloss | 20 | 24 | 21 | 22 | 21 | 25 | 26 | 25 | 24 | 24 | 23 | 31 | 32 | 27 | 30 | 30 |
| Inkjet dischargeability | 2 | 1 | 1 | 1 | 1 | 0 | 0 | 0 | 0 | 0 | 0 | 0 | 0 | 0 | 0 | 0 |
| 0Adhesiveness | 3 | 3 | 1 | 2 | 1 | 1 | 2 | 1 | 1 | 0 | 0 | 0 | 1 | 0 | 0 | 0 |
| * Proportions of compounds represented by formula (C-1) to formula (C-4) in the total amount of the (C) radical polymerizable compound | | | | | | | | | | | | | | | | |

In Table 5, Example 36 is a Reference Example.

### (Examples 37 to 43)

Yellow inks Y1 to Y4, magenta inks M1 to M3, cyan inks C37, black ink K1 and white ink W1 having the compositions indicated in Table 6 were prepared in the same manner as in Example 1. Subsequently, the combinations of inks as indicated in Table 7 were charged into a UV inkjet printer available from Fujifilm Holdings Corp., LuxelJet UV350GTW, and A1-sized test images composed of tone images containing composite black (respective densities of yellow, magenta, cyan and black set at 100%) were printed. The test images were printed on a coated paper available from Oji Paper Co., Ltd. (product name: OK Overcoat+) under the conditions of fine art mode and lamp 5. Evaluations of curability, banding, gloss and inkjet dischargeability were carried out in the same manner as in Example 1. Furthermore, an evaluation of adhesiveness was carried out in the same manner as in Example 1 using a polyvinyl chloride sheet available from Morino Kakou Co., Ltd. (product name: Emlon Calender Sheet (white), thickness 220 µm). The results are shown in Table 7.

**[Table 6]**

| Unit: parts by mass | Yellow ink | | | | Magenta ink | | | Cyan ink | Black ink | White ink |
|---|---|---|---|---|---|---|---|---|---|---|
| | Y1 | Y2 | Y3 | Y4 | M1 | M2 | M3 | C37 | K1 | W1 |
| Yellow mill base YM1 | 8 | | | | | | | | | |
| Yellow mill base YM2 | | 8 | | | | | | | | |
| Yellow mill base YM3 | | | 8 | | | | | | | |
| Yellow mill base YM4 | | | | 8 | | | | | | |
| Magenta mill base MM1 | | | | | 16 | | | | | |
| Magenta mill base MM2 | | | | | | 16 | | | | |
| Magenta mill base MM3 | | | | | | | 16 | | | |
| Cyan mill base CM2 | | | | | | | | 8.6 | | |
| Black mill base KM1 | | | | | | | | | 9 | |
| White mill base WM1 | | | | | | | | | | 30 |
| SR506D | 20.5 | 20.5 | 20.5 | 20.5 | 27.3 | 27.3 | 27.3 | 28.6 | 23 | 14 |
| NVC | 17.9 | 17.9 | 17.9 | 17.9 | 15.8 | 15.8 | 15.8 | 16.8 | 17.9 | 17.5 |
| SR531 | 31.8 | 27.2 | 29.2 | 30.7 | 21.5 | 21.5 | 21.5 | 22.5 | 20.4 | 11.4 |
| SR341 | 3.5 | 3.5 | 3.5 | 3.5 | 3.5 | 3.5 | 3.5 | 3.8 | 3.8 | 3.5 |
| IRGACURE 184 | 3 | 3 | 3 | 3 | 3 | 3 | 3 | 3 | 3 | 3 |
| IRGACURE 819 | 3.2 | 3.2 | 3.2 | 3.2 | 3.2 | 3.2 | 3.2 | 3.4 | 3.2 | 3.2 |
| Lucirin TPO-L | 8.5 | 8.5 | 8.5 | 8.5 | 8.5 | 8.5 | 8.5 | 7.5 | 9.9 | 9.3 |
| SPEEDCURE ITX | 3.2 | 3.2 | 3.2 | 3.2 | 0.8 | 0.8 | 0.8 | 0.8 | 4.8 | |
| CMTCO | | | | | | | | | | 7.7 |
| FIRSTCURE ST-1 | 0.4 | 0.4 | 0.4 | 0.4 | 0.4 | 0.4 | 0.4 | 0.4 | 0.4 | 0.4 |
| CN964A85 | | 4.6 | 2.6 | 1.1 | | | | 4.6 | 4.6 | |
| Monomer ratio (%)* | 91.3 | 84.1 | 86.7 | 90.3 | 83.4 | 85.1 | 85.1 | 83.4 | 82.7 | 71.4 |
| * Proportions of compounds represented by formula (C-1) to formula (C-4) in the total amount of the (C) radical polymerizable compound | | | | | | | | | | |

**[Table 7]**

| | Example | | | | | | |
|---|---|---|---|---|---|---|---|
| | 37 | 38 | 39 | 40 | 41 | 42 | 43 |
| Yellow ink | Y1 | Y2 | Y3 | Y4 | Y1 | Y1 | Y1 |
| Magenta ink | M1 | M1 | M1 | M1 | M2 | M3 | M1 |
| Cyan ink | C1 | C1 | C1 | C1 | C1 | C1 | C37 |
| Black ink | K1 | K1 | K1 | K1 | K1 | K1 | K1 |
| Curability | A | A | A | A | A | A | A |
| Banding | A | A | A | A | A | A | A |
| Gloss | 46 | 44 | 40 | 45 | 42 | 44 | 44 |
| Ink dischargeability | 0 | 1 | 2 | 1 | 1 | 1 | 1 |
| Adhesiveness | 1 | 1 | 1 | 0 | 1 | 1 | 1 |

### (Example 44)

White ink W1 having the composition indicated in Table 6 was prepared in the same manner as in Example 1, and was charged into a UV inkjet printer available from Fujifilm Holdings Corp., LuxelJet UV350GTW. A1-sized test images composed of white (set at 100%) tone images were printed, and test images were printed under the conditions of fine art mode and lamp 5 on a PET sheet available from Kimoto Co., Ltd. (product name: Viewful TP-100), and evaluations of curability, banding, gloss, inkjet dischargeability and adhesiveness were carried out based on the same criteria as in Example 1. As a result, the white ink was rated as A for curability, A for banding, 22 for gloss, 1 for inkjet dischargeability, and 1 for adhesiveness.

## Claims

1. An ink composition consisting of:
(Component A) a colorant;
(Component B) a radical polymerization initiator;
(Component C) a radical polymerizable compound,
a radical polyfunctional polymerizable compound, and optionally
a surfactant
a dispersant, and
other components selected from a co-sensitizer, an ultraviolet absorbent, an antioxidant, a discoloration preventing agent, a conductive salt, a solvent, a polymer compound, a basic compound, a leveling additive, a mattifying agent, and a polyester resin, a polyurethane resin,
a vinyl resin, an acrylic resin, a rubber resin and a wax for adjusting the film properties,
wherein the (Component B) radical polymerization initiator includes a compound represented by formula (B-I) and a compound represented by formula (B-II),
the ink composition comprises the compound represented by formula (B-I) in an amount of from 1 % by mass to 7 % by mass based on the total mass of the ink composition, and
the ink composition comprises the compound represented by formula (B-II) in an amount of from 1 % by mass to 14 % by mass based on the total mass of the ink composition: 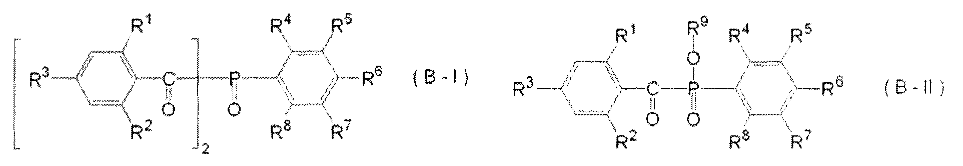
wherein in the formula (B-I) and formula (B-II), R₁ and R₂ each independently represent an alkyl group having 1 to 4 carbon atoms; R₃ represents a hydrogen atom, a hydrocarbon group having 1 to 20 carbon atoms, or an alkoxy group having 1 to 20 carbon atoms; R₄, R₅, R₆, R₇ and R₈ each independently represent a hydrogen atom, a halogen atom, a hydrocarbon group having 1 to 20 carbon atoms, or an alkoxy group having 1 to 20 carbon atoms; R₉ represents a hydrocarbon group having 1 to 20 carbon atoms; and R₁, R₂ and R₃ that are present twice in the formula (B-I) may be respectively identical with or different from each other,
wherein the (Component C) radical polymerizable compound includes a compound represented by the formula (C-2) or a compound represented by the formula (C-4), and optionally a compound represented by the formula (C-1) and/or a compound represented by the formula (C-3): 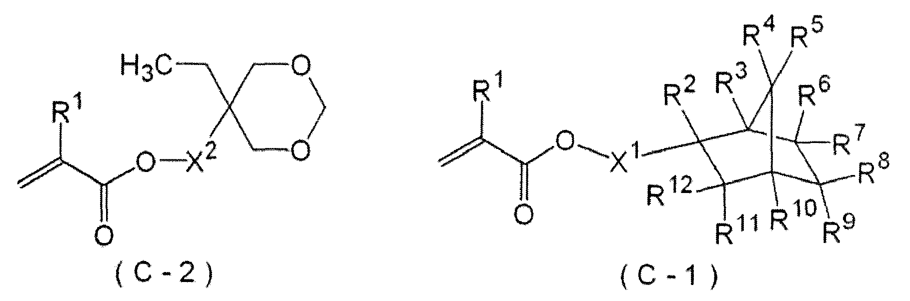 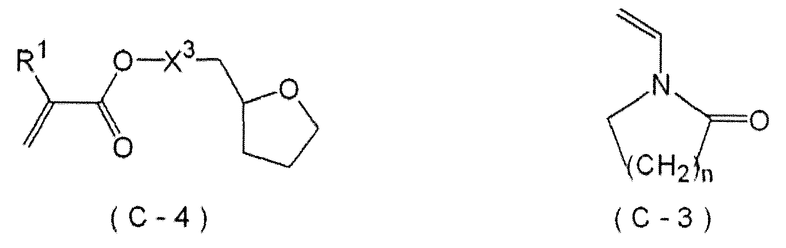
wherein in the formula (C-2) and formula (C-4), R¹ represents a hydrogen atom or a methyl group; X², and X³ each represent a single bond or a divalent linking group,
wherein in the formula (C-1) and formula (C-3), R¹ represents a hydrogen atom or a methyl group; X¹ represents a single bond or a divalent linking group; R² to R¹² each independently represent a hydrogen atom or an alkyl group; and n represents an integer from 1 to 5,
wherein the ink composition includes, the compound represented by the formula (C-1), the compound represented by the formula (C-2), the compound represented by the formula (C-3) and the compound represented by the formula (C-4), in an amount in total of 20 % by mass or greater based on the total amount of the (Component C) radical polymerizable compound, and
wherein a content of the polyfunctional polymerizable compound is 1 % by mass to 20 % by mass based on the total mass of the ink composition.

2. The ink composition according to claim 1, wherein the compound represented by formula (B-I) is compound (B-I-1), and the compound represented by formula (B-II) is compound (B-II-1):

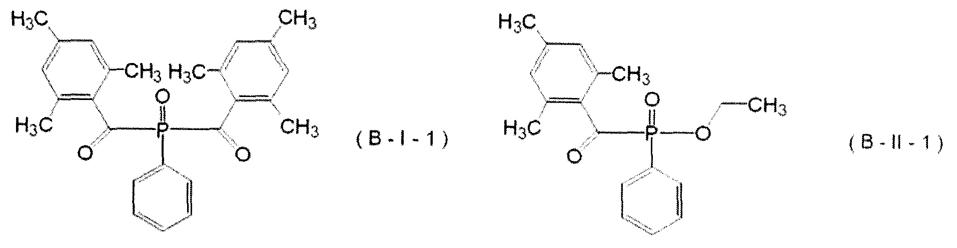

3. The ink composition according to claim 1 or 2, wherein the (Component B) radical polymerization initiator further includes a compound represented by formula (B-III) and/or a compound represented by formula (B-IV): 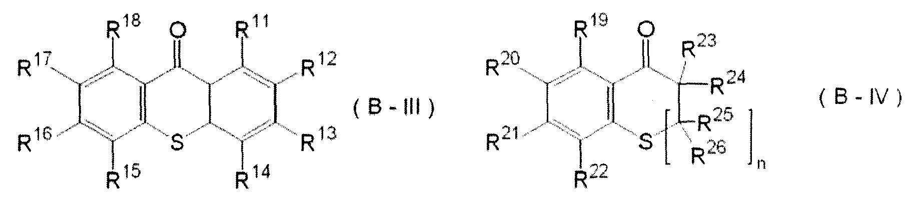 wherein in the formula (B-III) and formula (B-IV), R¹¹ to R²⁶ each independently represent a hydrogen atom, or a monovalent substituent; and n represents 0 or 1.

4. The ink composition according to any one of claims 1 to 3, wherein the (Component C) radical polymerizable compound includes at least two compounds selected from the group consisting of the compounds represented by the formula (C-1) to formula (C-4).

5. The ink composition according to any one of claims 1 to 4, wherein the (Component C) radical polymerizable compound includes the compounds represented by the above formula (C-1) to formula (C-4) in an amount of 80 % by mass or greater based on the total amount of the radical polymerizable compounds.

6. The ink composition according to any one of claims 1 to 5, wherein the ink composition is for use in inkjet recording.

7. The ink composition according to claim 1, wherein
X¹ in the formula (C-1) is a single bond, a divalent hydrocarbon group, a poly(alkyleneoxy) group, or a poly(alkyleneoxy)alkyl group, having a number of carbon atoms of 1 to 60,
X² in the formula (C-2) is a single bond, a divalent hydrocarbon group, a poly(alkyleneoxy) group, or a poly(alkyleneoxy)alkyl group, having a number of carbon atoms of 1 to 60, and
X³ in the formula (C-4) is a single bond, -R⁶-O- or -R⁶-COO-, wherein R⁶ represents an alkyl group having 1 to 5 carbon atoms, or a group obtained by combining two or more of these.

8. The ink composition according to claim 1, wherein
the compound represented by the formula (C-1) is selected from the group consisting of compounds (C-1-1) to (C-1-6): 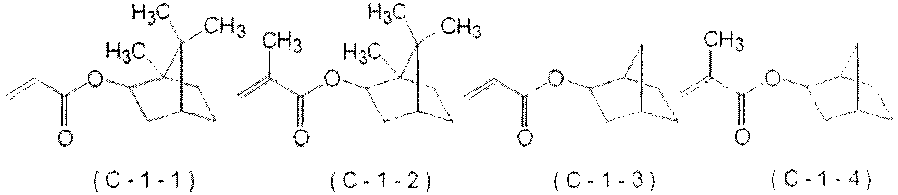 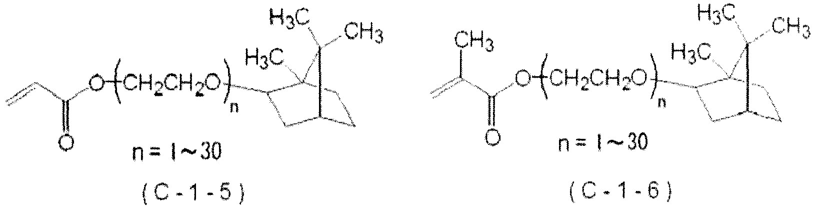
the compound represented by the formula (C-2) is selected from the group consisting of compounds (C-2-1) to (C-2-4): 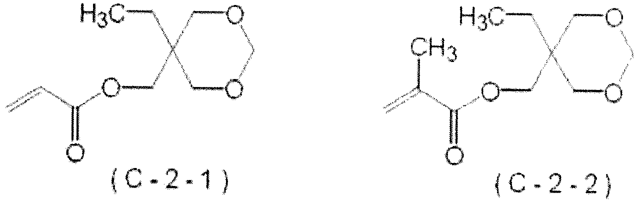 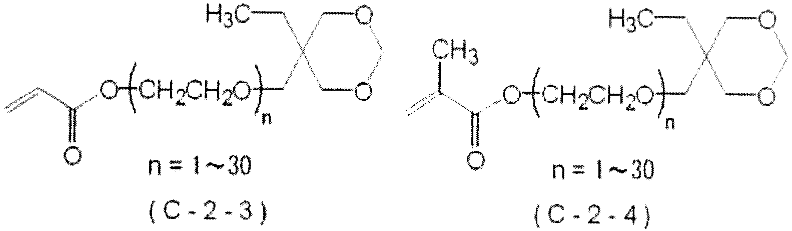
the compound represented by the formula (C-4) is selected from the group consisting of compounds (C-4-1) to (C-4-22):

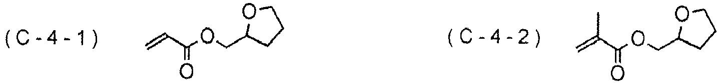

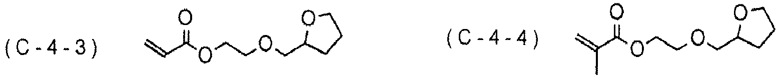

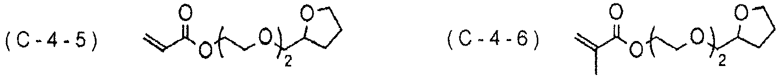

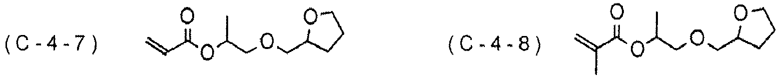

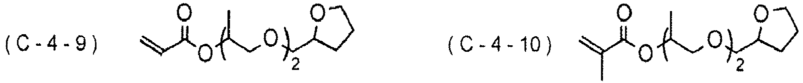

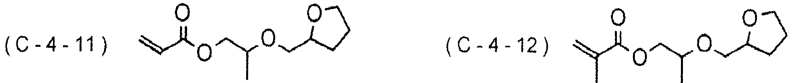

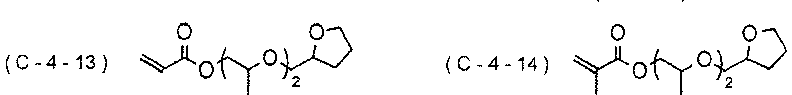

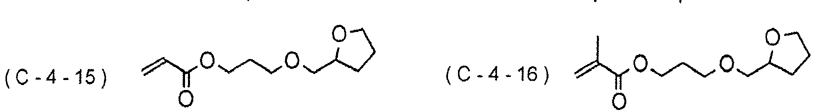

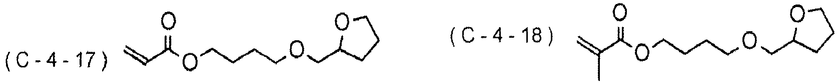

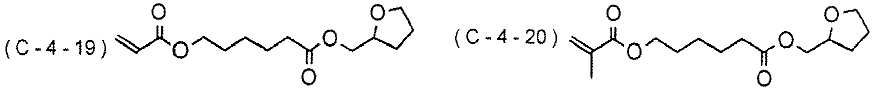

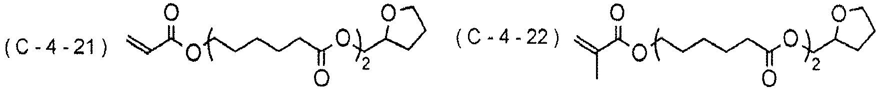

9. The ink composition according to any one of claims 1, 7 or 8, wherein X¹ in the formula (C-1) is a single bond, X² in the formula (C-2) is a divalent hydrocarbon group having a number of carbon atoms of 1 to 8, and X³ in the formula (C-4) is a single bond.

10. The ink composition according to any one of claims 1 to 9, wherein the ink composition includes the compounds represented by the above formula (C-1) to formula (C-4) in an amount of 50 % by mass or greater based on the total amount of the radical polymerizable compounds.

## Patentansprüche

1. Tintenzusammensetzung bestehend aus:
(Komponente A) einem Färbemittel;
(Komponente B) einem radikalischen Polymerisationsinitiator;
(Komponente C) einer radikalisch polymerisierbaren Verbindung,
einer polyfunktionalen polymerisierbaren Verbindung und optional
einem Tensid,
einem Dispergiermittel und
anderen Komponenten, ausgewählt aus einem Co-Sensibilisierungsmittel, einem Ultraviolettabsorber, einem Antioxidans, einem Entfärbung verhinderndes Mittel, einem leitfähigen Salz, einem Lösungsmittel, einer Polymerverbindung, einer basischen Verbindung, einem Nivellierungsadditiv, einem Mattierungsmittel und einem Polyesterharz, einem Polyurethanharz, einem Vinylharz, einem Acrylharz, einem Gummiharz und einem Wachs, um die Filmeigenschaften anzupassen,
wobei der (Komponente B) radikalische Polymerisationsinitiator eine durch Formel (B-I) dargestellte Verbindung und eine durch Formel (B-II) dargestellte Verbindung umfasst,
wobei die Tintenzusammensetzung die durch Formel (B-I) dargestellte Verbindung in einer Menge von 1 Masse% bis 7 Masse%, basierend auf der Gesamtmasse der Tintenzusammensetzung, umfasst, und
wobei die Tintenzusammensetzung die durch Formel (B-II) dargestellte Verbindung in einer Menge von 1 Masse% bis 14 Masse%, basierend auf der Gesamtmasse der Tintenzusammensetzung, umfasst: 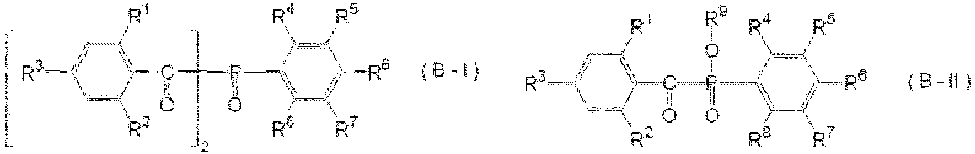
wobei in der Formel (B-I) und Formel (B-II), R¹ und R² jeweils unabhängig eine Alkylgruppe mit 1 bis 4 Kohlenstoffatomen darstellen; R³ ein Wasserstoffatom, eine Kohlenwasserstoffgruppe mit 1 bis 20 Kohlenstoffatomen oder eine Alkoxygruppe mit 1 bis 20 Kohlenstoffatomen darstellt; R⁴, R⁵, R⁶, R⁷ und R⁸ jeweils unabhängig ein Wasserstoffatom, ein Halogenatom, eine Kohlenwasserstoffgruppe mit 1 bis 20 Kohlenstoffatomen oder eine Alkoxygruppe mit 1 bis 20 Kohlenstoffatomen darstellen; R⁹ eine Kohlenwasserstoffgruppe mit 1 bis 20 Kohlenstoffatomen darstellt; und R¹, R² und R³, die zweimal in Formel (B-I) vorhanden sind, jeweils gleich oder voneinander unterschiedlich sein können,
wobei die (Komponente C) radikalisch polymerisierbare Verbindung eine durch die Formel (C-2) dargestellte Verbindung oder eine durch die Formel (C-4) dargestellte Verbindung und optional eine durch die Formel (C-1) dargestellte Verbindung und/oder eine durch die Formel (C-3) dargestellte Verbindung umfasst: 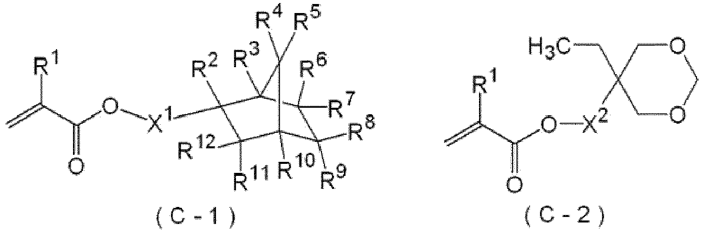 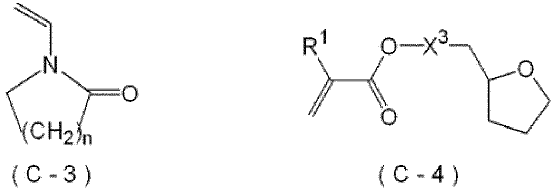
wobei in der Formel (C-2) und Formel (C-4), R¹ ein Wasserstoffatom oder eine Methylgruppe darstellt; X² und X³ jeweils eine Einfachbindung oder eine divalente Verbindungsgruppe darstellen;
wobei in der Formel (C-1) und Formel (C-3), R¹ ein Wasserstoffatom oder eine Methylgruppe darstellt; X¹ eine Einfachbindung oder eine divalente Verbindungsgruppe darstellt; R² bis R¹² jeweils unabhängig ein Wasserstoffatom oder eine Alkylgruppe darstellen; und n eine ganze Zahl von 1 bis 5 darstellt,
wobei die Tintenzusammensetzung die durch die Formel (C-1) dargestellte Verbindung, die durch die Formel (C-2) dargestellte Verbindung, die durch die Formel (C-3) dargestellte Verbindung und die durch die Formel (C-4) dargestellte Verbindung in einer Gesamtmenge von 20 Masse% oder mehr, basierend auf der Gesamtmenge der (Komponente C) radikalisch polymerisierbaren Verbindung umfasst, und
wobei ein Gehalt an der polyfunktionalen polymerisierbaren Verbindung 1 Masse% bis 20 Masse%, basierend auf der Gesamtmasse der Tintenzusammensetzung beträgt.

2. Tintenzusammensetzung nach Anspruch 1, wobei die durch Formel (B-I) dargestellte Verbindung Verbindung (B-I-1) ist, und die durch Formel (B-II) dargestellte Verbindung Verbindung (B-II-1) ist:

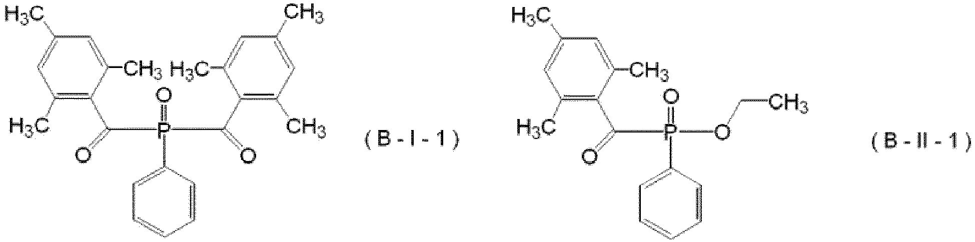

3. Tintenzusammensetzung nach Anspruch 1 oder 2, wobei der (Komponente B) radikalische Polymerisationsinitiator ferner eine durch Formel (B-III) dargestellte Verbindung und/oder eine durch Formel (B-IV) dargestellte Verbindung umfasst: 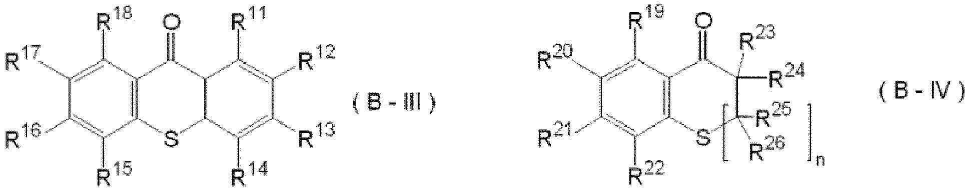 wobei in der Formel (B-III) und Formel (B-IV), R¹¹ bis R²⁶ jeweils unabhängig ein Wasserstoffatom oder einen monovalenten Substituent darstellen; und n 0 oder 1 darstellt.

4. Tintenzusammensetzung nach einem der Ansprüche 1 bis 3, wobei die (Komponente C) radikalisch polymerisierbare Verbindung mindestens zwei Verbindungen, ausgewählt aus der Gruppe bestehend aus durch die oben dargestellten Formeln (C-1) bis (C-4) dargestellte Verbindungen, umfasst.

5. Tintenzusammensetzung nach einem der Ansprüche 1 bis 4, wobei die (Komponente C) radikalisch polymerisierbare Verbindung die durch die obigen Formeln (C-1) bis (C-4) dargestellten Verbindungen in einer Menge von 80 Masse% oder mehr, basierend auf der Gesamtmasse der radikalisch polymerisierbaren Verbindungen, aufweist.

6. Tintenzusammensetzung nach einem der Ansprüche1 bis 5, wobei die Tintenzusammensetzung zur Verwendung in der Tintenstrahlaufzeichnung ist.

7. Tintenzusammensetzung nach Anspruch 1, wobei
X¹ in der Formel (C-1) eine Einfachbindung, eine divalente Kohlenwasserstoffgruppe, eine Poly(alkylenoxy)gruppe oder eine Poly(alkylenoxy)alkylgruppe mit einer Anzahl an Kohlenstoffatomen von 1 bis 60 ist,
X² in der Formel (C-2) eine Einfachbindung, eine divalente Kohlenwasserstoffgruppe, eine Poly(alkylenoxy)gruppe oder eine Poly(alkylenoxy)alkylgruppe mit einer Anzahl an Kohlenstoffatomen von 1 bis 60 ist, und
X³ in der Formel (C-4) eine Einfachbindung, -R⁶-O- oder -R⁶-COO- ist, wobei R⁶ eine Alkylgruppe mit 1 bis 5 Kohlenstoffatomen darstellt oder eine Gruppe, die durch Kombination von zwei oder mehreren von diesen erhalten wurde.

8. Tintenzusammensetzung nach Anspruch 1, wobei
die durch Formel (C-1) dargestellte Verbindung ausgewählt ist aus der Gruppe bestehend aus Verbindungen (C-1-1) bis (C-1-6): 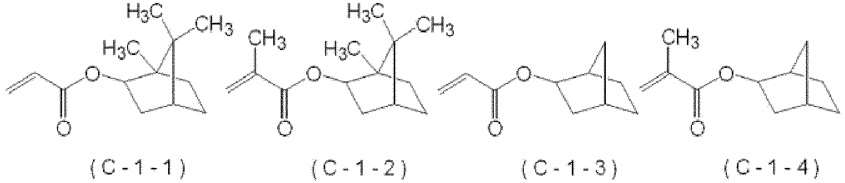 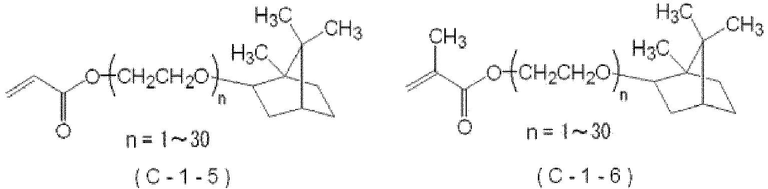
wobei die durch Formel (C-2) dargestellte Verbindung ausgewählt ist aus der Gruppe bestehend aus Verbindungen (C-2-1) bis (C-2-4): 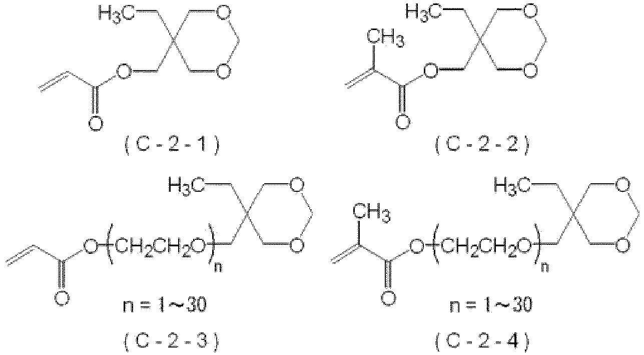
wobei die durch Formel (C-4) dargestellte Verbindung ausgewählt ist aus der Gruppe aus Verbindungen (C-4-1) bis (C-4-22):

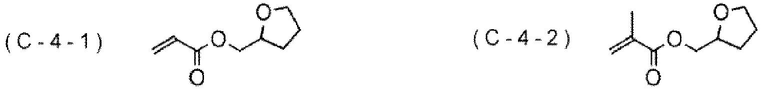

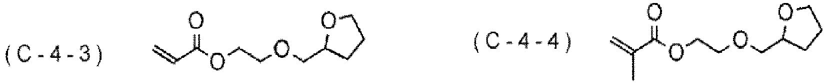

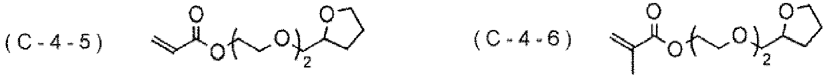

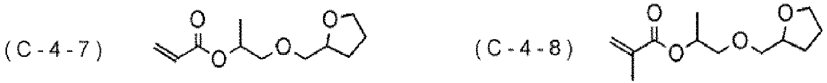

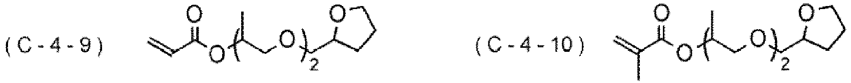

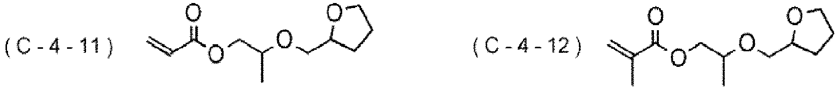

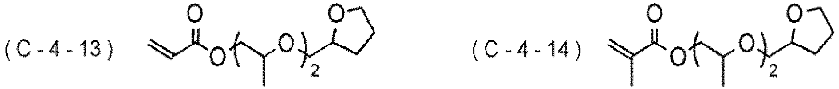

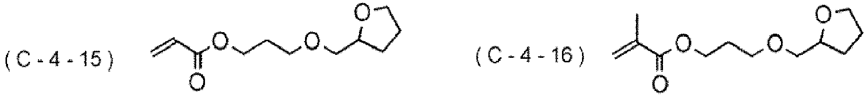

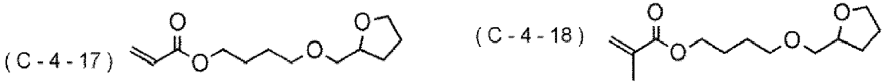

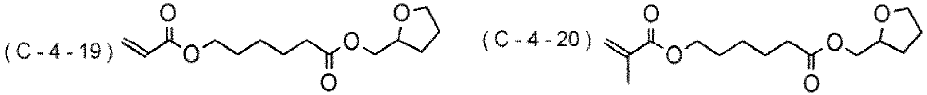

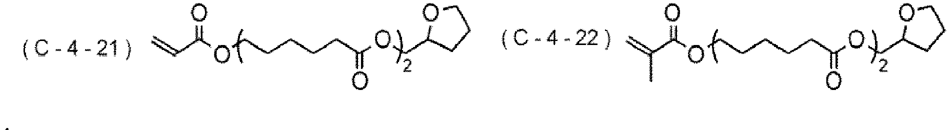

9. Tintenzusammensetzung nach einem der Ansprüche 1, 7 oder 8, wobei X¹ in der Formel (C-1) eine Einfachbindung ist, X² in der Formel (C-2) eine divalente Kohlenwasserstoffgruppe mit einer Kohlenstoffanzahl von 1 bis 8 ist und X³ in Formel (C-4) eine Einfachbindung ist.

10. Tintenzusammensetzung nach einem der Ansprüche 1 bis 9, wobei die Tintenzusammensetzung die durch die obige Formel (C-1) bis Formel (C-4) dargestellten Verbindungen in einer Menge von 50 Masse% oder mehr, basierend auf der Gesamtmenge der radikalisch polymerisierbaren Verbindungen, enthält.

## Revendications

1. Composition d'encre, consistant en :
(Composant A) un colorant ;
(Composant B) un initiateur de polymérisation par radicaux ;
(Composant C) un composé polymérisable par radicaux, et
un composé polyfonctionnel polymérisable par radicaux, et facultativement
un agent tensio-actif ;
un agent dispersant, et
d'autres composants sélectionnés parmi un agent de co-sensibilisation, un agent absorbant les ultraviolets, un agent anti-oxydant, un agent de prévention de la décoloration, un sel conducteur, un solvant, un composé polymère, un composé basique, un agent égalisant, un agent matifiant, et une résine de polyester, une résine de polyuréthane, une résine vinylique, une résine acrylique, une résine de caoutchouc, et une cire pour régler les propriétés de film,
dans laquelle le (Composant B) initiateur de polymérisation par radicaux inclut un composé représenté par la formule (B-I) et un composé représenté par la formule (B-II),
la composition d'encre comprend le composé représenté par la formule (B-I) en une quantité allant de 1 % en masse à 7 % en masse sur la base de la masse totale de la composition d'encre, et
la composition d'encre comprend le composé représenté par la formule (B-II) en une quantité allant de 1 % en masse à 14 % en masse sur la base de la masse totale de la composition d'encre : 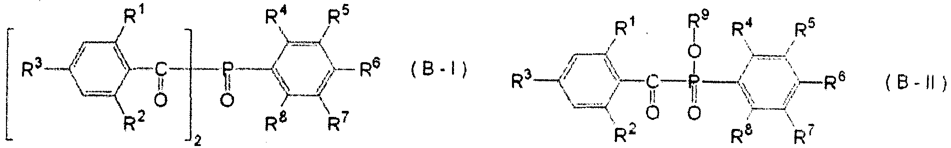 où dans la formule (B-I) et la formule (B-II), R₁ et R₂ représentent chacun indépendamment un groupe alkyle présentant de 1 à 4 atomes de carbone ; R₃ représente un atome d'hydrogène, un groupe hydrocarboné présentant de 1 à 20 atomes de carbone, ou un groupe alkoxy présentant de 1 à 20 atomes de carbone ; R₄, R₅, R₆, R₇ et R₈ représentent chacun indépendamment un atome d'hydrogène, un atome d'halogène, un groupe hydrocarboné présentant de 1 à 20 atomes de carbone, ou un groupe alkoxy présentant de 1 à 20 atomes de carbone ; R₉ représente un groupe hydrocarboné présentant de 1 à 20 atomes de carbone, et R₁, R₂ et R₃, présents deux fois dans la formule (B-1), peuvent être respectivement identiques ou différents l'un de l'autre ;
dans laquelle le (Composant C) composé polymérisable par radicaux inclut un composé représenté par la formule (C-2) ou un composé représenté par la formule (C-4), et facultativement, un composé représenté par la formule (C-1) et/ou un composé représenté par la formule (C-3) : 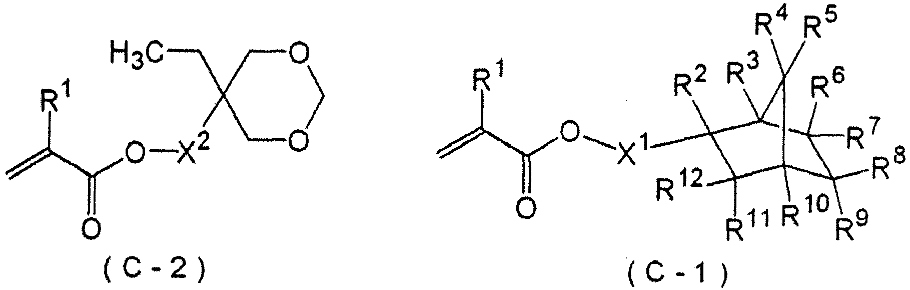 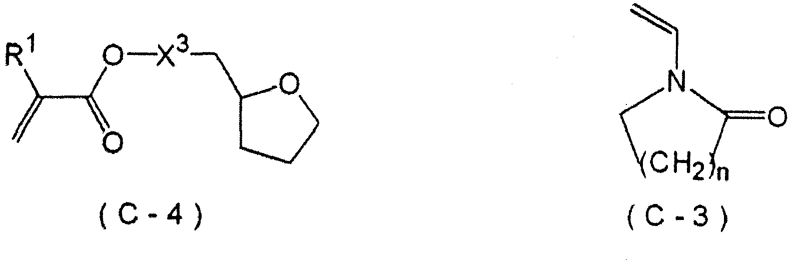
où dans la formule (C-2) et formule (C-4), R¹ représente un atome d'hydrogène ou un groupe méthyle ; X² et X³ représentent chacun une liaison simple ou un groupe de liaison divalent ;
où dans la formule (C-1) et formule (C-3), R¹ représente un atome d'hydrogène ou un groupe méthyle ; X¹ représente chacun une liaison simple ou un groupe de liaison divalent ; R² à R¹² représentent chacun indépendamment un atome d'hydrogène ou un groupe alkyle, et n représente un entier allant de 1 à 5 ;
dans laquelle la composition d'encre inclut le composé représenté par la formule (C-1), le composé représenté par la formule (C-2), le composé représenté par la formule (C-3), et le composé représenté par la formule (C-4), en une quantité au total supérieure ou égale à 20 % en masse sur la base de la quantité totale du (Composant C) composé polymérisable par radicaux, et
dans laquelle une teneur du composé polyfonctionnel polymérisable s'étend de 1 % en masse à 20 % en masse sur la base de la masse totale de la composition d'encre.

2. Composition d'encre selon la revendication 1, dans laquelle le composé représenté par la formule (B-I) est le composé (B-I-1), et le composé représenté par la formule (B-II) est le composé (B-II-1) :

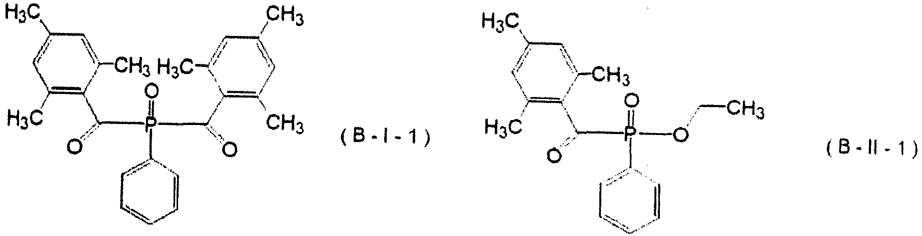

3. Composition d'encre selon la revendication 1 ou 2, dans laquelle le (Composant B) initiateur de polymérisation par radicaux inclut en outre un composé représenté par la formule (B-III) et/ou un composé représenté par la formule (B-IV) : 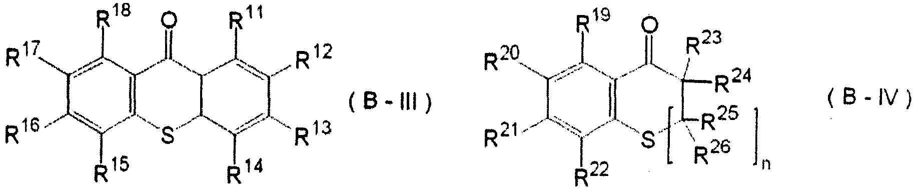 où dans la formule (B-III) et la formule (B-IV), R¹¹ à R²⁶ représentent chacun indépendamment un atome d'hydrogène, ou un substituant monovalent, et n représente 0 ou 1.

4. Composition d'encre selon l'une quelconque des revendications 1 à 3, dans laquelle le (Composant C) composé polymérisable par radicaux inclut au moins deux composés sélectionnés parmi le groupe consistant en les composés représentés par les formule (C-1) à formule (C-4).

5. Composition d'encre selon l'une quelconque des revendications 1 à 4, dans laquelle le (Composant C) composé polymérisable par radicaux inclut les composés représentés par les formule (C-1) à formule (C-4) susmentionnées en une quantité supérieure ou égale à 80 % en masse sur la base de la quantité totale des composés polymérisables par radicaux.

6. Composition d'encre selon l'une quelconque des revendications 1 à 5, dans laquelle la composition d'encre est destinée à une utilisation pour l'enregistrement par jet d'encre.

7. Composition d'encre selon la revendication 1, dans laquelle
X¹ dans la formule (C-1) est une liaison simple, un groupe hydrocarboné divalent, un groupe poly(alkylèneoxy), ou un groupe poly(alkylèneoxy)alkyle, présentant un nombre d'atomes de carbone allant de 1 à 60 ;
X² dans la formule (C-2) est une liaison simple, un groupe hydrocarboné divalent, un groupe poly(alkylèneoxy), ou un groupe poly(alkylèneoxy)alkyle, présentant un nombre d'atomes de carbone allant de 1 à 60, et
X³ dans la formule (C-4) est une liaison simple, -R⁶-O- ou -R⁶-COO-, où R⁶ représente un groupe alkyle présentant de 1 à 5 atomes de carbone, ou un groupe obtenu en combinant deux ou plus de ceux-ci.

8. Composition d'encre selon la revendication 1, dans laquelle
le composé représenté par la formule (C-1) est sélectionné parmi le groupe consistant en les composés (C-1-1) à (C-1-6) : 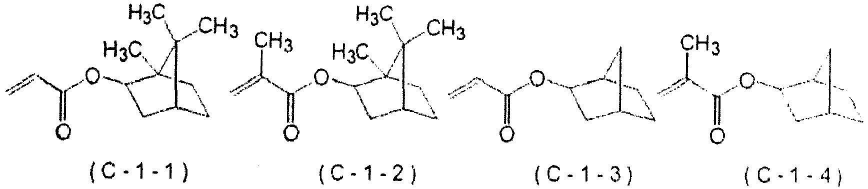 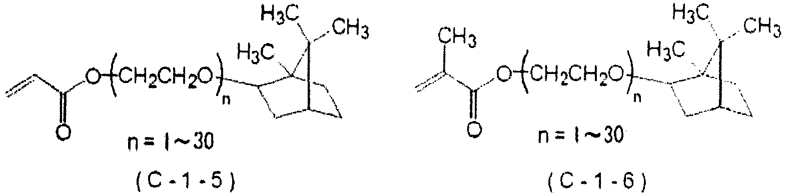
le composé représenté par la formule (C-2) est sélectionné parmi le groupe consistant en les composés (C-2-1) à (C-2-4) : 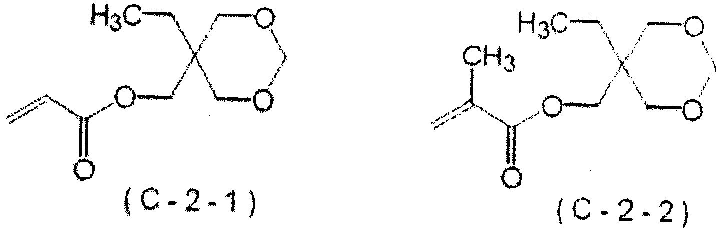 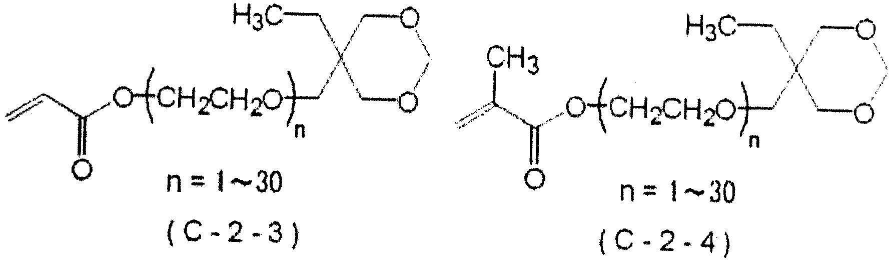
le composé représenté par la formule (C-4) est sélectionné parmi le groupe consistant en les composés (C-4-1) à (C-4-22) :

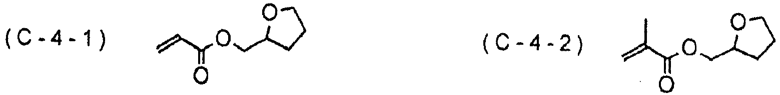

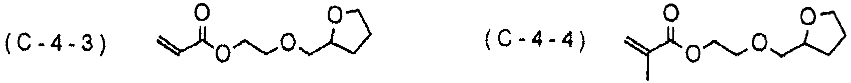

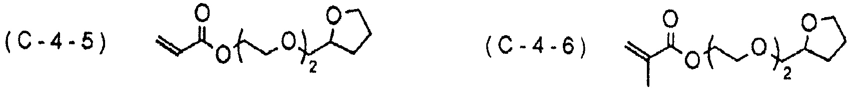

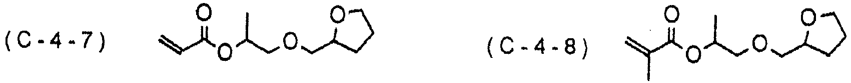

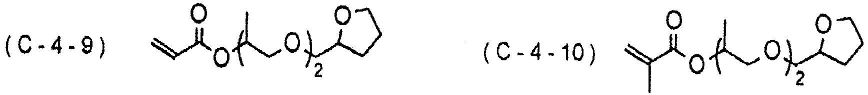

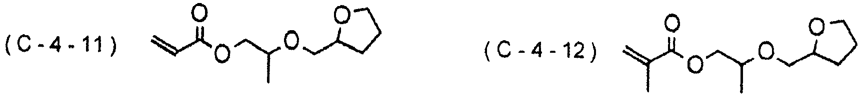

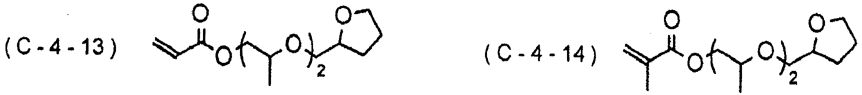

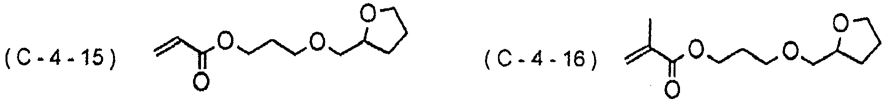

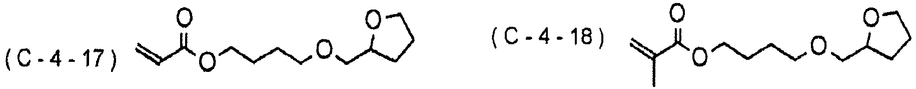

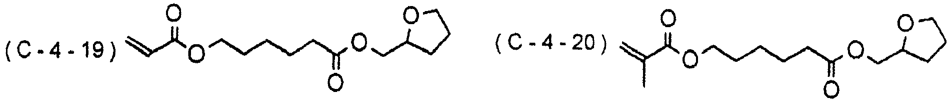

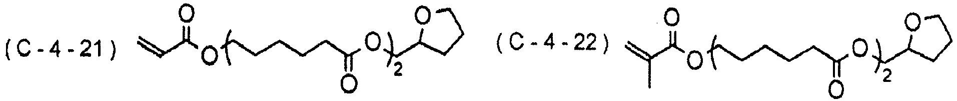

9. Composition d'encre selon la revendication 1, 7 ou 8, dans laquelle X¹ dans la formule (C-1) est une liaison simple, X² dans la formule (C-2) est un groupe hydrocarboné divalent présentant un nombre d'atomes de carbone allant de 1 à 8, et X³ dans la formule (C-4) est une liaison simple.

10. Composition d'encre selon l'une quelconque des revendications 1 à 9, dans laquelle la composition d'encre inclut les composés représentés par les formule (C-1) à formule (C-4) en une quantité supérieure ou égale à 50 % en masse sur la base de la quantité totale des composés polymérisables par radicaux.
